# EUROPEAN PATENT APPLICATION

(11) **EP 4 600 937 A1**
(43) Date of publication of application: **13.08.2025**
(21) Application number: 25152836.0
(22) Date of filing: 20.01.2025
(51) Int. Cl.: G08G 5/26, G08G 5/32, G08G 5/34, H04W 4/42, H04W 4/44

(54) **SYSTEMS AND METHODS FOR SUBSCRIPTION-BASED COMMUNICATION OF VEHICLE-RELEVANT DATA**

(30) Priority: 12.02.2024 IN 202411009216; 04.04.2024 US 202418626752
(71) Applicant: Honeywell International Inc., Charlotte, NC 28202 (US)
(72) Inventor: BALADHANDAPANI, Gobinathan, Charlotte, 28202 (US); KANAGARAJAN, Sivakumar, Charlotte, 28202 (US); RAO, Nayyar A., Charlotte, 28202 (US)
(74) Representative: Haseltine Lake Kempner LLP

(57) **Abstract**

Embodiments of the present disclosure provide systems and methods subscription-based communication of vehicle-relevant data. In one embodiment, vehicle-relevant data associated with a particular data classification of a plurality of data classifications is received from at least one data source system. A determination may be made that at least one client device is subscribed to the particular data classification. A determination may be made, based on vehicle context data, that at least one context-based criterion associated with the at least one client device is satisfied using a context processing model configured to learn the at least one context-based criterion. At least the vehicle-relevant data may be transmitted to the at least one client device in response to the determination that the at least one context-based criterion is satisfied.

## Description

### CROSS-REFERENCE TO RELATED APPLICATIONS

This application claims priority to and the benefit of foreign Indian Provisional Patent Application Serial No. 202411009216, filed on February 12, 2024 with the Government of India Patent Office and entitled "SYSTEMS AND METHODS FOR SUBSCRIPTION-BASED COMMUNICATION OF VEHICLE-RELEVANT DATA," the contents of which are incorporated herein by reference in their entirety.

### TECHNICAL FIELD

Embodiments of the present disclosure generally relate to techniques for improved communication efficiency between vehicles, and specifically to systems and methods for subscription-based communication of vehicle-relevant data.

### BACKGROUND

Various techniques and systems may be utilized for the transmission and reception of communications within a communication system that includes at least one vehicle. For example, at least one first vehicle or at least one stationary, ground-based communication device may be configured to periodically transmit data for reception by at least one second vehicle. The data communicated in such examples may include navigational data, vehicle control data, collision avoidance data, environmental data, and/or the like. In some examples, data communications may be configured to occur periodically without consideration of whether the data is relevant to various recipients of the data. Additionally, or alternatively, bulk data transmissions that include multiple data objects or multiple types of data may be communicated, which may result in the delivery of data that is not relevant to recipients. Such communication inefficiencies may increase signaling overheard and increase costs associated with the use of various paid communication channels.

### BRIEF SUMMARY

In accordance with a first aspect of the disclosure, a method is provided. In some embodiments, the method is executable by at least one computing device embodied in hardware, software, firmware, and/or any combination thereof as described herein. In some example embodiments, the example method includes receiving, from at least one data source system, vehicle-relevant data associated with a particular data classification of a plurality of data classifications. The example method further includes determining at least one client device is subscribed to the particular data classification. The example method further includes determining, based at least in part on vehicle context data, that at least one context-based criterion associated with the at least one client device is satisfied using a context processing model configured to learn the at least one context-based criterion. The example method further includes transmitting, to the at least one client device, at least the vehicle-relevant data in response to determining that the at least one context-based criterion is satisfied.

In some example embodiments of the example method, the method further includes receiving historical data transfer information indicative of at least one data transfer event for historical vehicle-relevant data and at least one context corresponding to the at least one data transfer event; and configuring the context processing model to learn the at least one context-based criterion based at least at part on the historical data transfer information.

In some example embodiments of the example method, the method further includes determining to (i) transmit the at least the vehicle-relevant data associated with the particular data classification and (ii) refrain from transmitting other vehicle-relevant data associated with at least one other data classification based at least in part on determining that (a) the at least one client device is subscribed to the particular data classification and (b) the at least one context-based criterion is satisfied.

In some example embodiments of the example method, the at least one context-based criterion comprises at least one of: (i) a vehicle operational criterion, (ii) a location-based criterion, or (iii) an environmental-based criterion.

In some example embodiments of the example method, the plurality of data classifications comprises at least one of: (i) a data classification associated with weather data, (ii) a data classification associated with flight plan data, (iii) a data classification associated with airport data, or (iv) a data classification associated with notice to airmen (NOTAM) data.

In some example embodiments of the example method, the at least one data source system comprises at least one of: (i) a stationary data source system or (ii) a mobile data source system.

In some example embodiments of the example method, the vehicle context data comprises at least one of: (i) motion data for a vehicle, (ii) position data for the vehicle, (iii) system data for the vehicle, (iv) passenger data for the vehicle, or (v) environmental data for the vehicle.

In accordance with a second aspect of the disclosure, an apparatus is provided. In one example embodiment of the apparatus, an example apparatus includes at least one processor and at least one memory storing instructions that, when executed by the at least one processor, cause the apparatus to perform any one of the methods described herein. A second example apparatus includes means for performing each step of any one of the methods described herein.

In accordance with a third aspect of the disclosure, a system is provided. In one example embodiment of the system, an example system includes a plurality of client devices and at least one contextual processor in communication with at least one client device of the plurality of client devices, wherein the at least one contextual processor is configured to perform any one of the methods described herein. In one example embodiment of the system, an example system includes at least one non-transitory computer-readable storage medium having computer program code stored thereon that, in combination with at least one processor, is configured for performing any one of the example methods described herein.

### BRIEF DESCRIPTION OF THE DRAWINGS

FIG. 1 illustrates a system for subscription-based communication of vehicle-relevant data in accordance with at least some embodiments of the present disclosure.
FIG. 2 illustrates a block diagram of a computing device for subscription-based communication of vehicle-relevant data in accordance with at least some embodiments of the present disclosure.
FIG. 3 is a dataflow diagram showing example data structures and modules for subscription-based communication of vehicle-relevant data in accordance with at least some embodiments of the present disclosure.
FIGs. 4A and 4B are operational examples of timing diagrams that illustrate the communication of vehicle-relevant data in accordance with at least some embodiments of the present disclosure.
FIG. 5 is an operational example of a signaling diagram for subscription-based communication of vehicle-relevant data in accordance with at least some embodiments of the present disclosure.
FIGs. 6A and 6B are operational examples of communication networks that support subscription-based communication of vehicle-relevant data between avionic entities in accordance with at least some embodiments of the present disclosure.
FIG. 7 illustrates a process for subscription-based communication of vehicle-relevant data in accordance with at least some embodiments of the present disclosure.

### DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout.

### OVERVIEW

Connected vehicles are rapidly transforming transportation systems, making transportation safer, more efficient, and more convenient. Recent technological advances have enabled application providers to develop tablet applications that can interface and communicate information with the vehicle computers through a developer's kit. As data throughput for such systems increases, effective management of data becomes even more critical.

A connected avionics platform, for example, may enable the exchange of data based on requests originating from clients, such as a vehicle computing device or application (e.g., an electronic flight bag (EFB)). In some examples, data may be communicated via at least one paid communication channel. Additionally, or alternatively, bulk data records may be communicated even though only a portion of the data in the bulk data record may be relevant to a client. In such examples, communication of bulk data records may increase costs and utilization of communication resources. Additionally, or alternatively, some data may be transmitted to at least one client in a repetitive fashion (e.g., periodically) and without consideration of relevant communication timing, which may also result in increased costs and utilization of communication resources.

In one illustrative example, a client may initially request at least one waypoint, constraint, and/or prediction for an active flight plan. Subsequently, the client may want to remove the at least one prediction to reduce the data bandwidth. In some other examples, the client may want to receive additional information, such as procedure information. However, existing technologies may not be capable of adding or removing different types of data from a bulk data transfer. In another illustrative example, a client may continuously receive various types of data, even if the data is not relevant. For example, a client may receive descent rate data after a descend phase transition, which may result in increased communication overhead.

In accordance with examples described herein, a context-based intelligent decision-making system is provided. The context-based intelligent decision-making system may be configured to provide data to at least one client device based on at least one context-based criterion being satisfied, which may increase available communication bandwidth and reduce communication costs. Additionally, or alternatively, the decision-making system may utilize a publish-subscribe system to provide filtered data (e.g., a subset of data in a bulk data record) to subscribers and to refrain from providing data to client devices that are not subscribed to the data.

In some examples, a cloud-based flight management system (cFMS) may perform at least a portion of the techniques described herein. For example, a cFMS may be utilized as a platform for implementing a context processor and a publish-subscribe framework. As described herein, the cFMS may have at least one client that subscribes to at least one data classification and the cFMS may publish the data to the at least one client when at least one context-based criterion is satisfied by the client. The context-based criterion may be based on at least one flight parameter, condition, and/or metric. For example, the at least one context-based criterion may include a vehicle operational criterion, a location-based criterion, an environmental-based criterion, and/or the like. By publishing data to clients based on at least one subscription and/or at least one context-based criterion, network bandwidth may be conserved.

The techniques described herein also provide a method for determining interested or relevant data for at least one client device. For example, a model may be utilized to determine vehicle-relevant data for at least one client device and/or at least one corresponding context-based criterion for providing the vehicle-relevant data. For example, the model may utilize historical vehicle-relevant data to learn relevant data for at least one client device and/or the corresponding context-based criterion for providing the vehicle-relevant data.

Embodiments of the present disclosure provide a myriad of technical advantages. For example, techniques of the present disclosure reduce bandwidth utilization for communications, thereby improving communication throughput and reducing operational costs associated with the utilization of various paid communication channels. Additionally, or alternatively, the techniques of the present disclosure may enable the automatic identification of data relevant to at least one client device and/or at least one context-based criterion for providing the relevant data. Such techniques may reduce or eliminate operational inefficiencies associated with the manual determination of relevant data and/or timing for providing relevant data. In some examples, the automatic determination of relevant data and relevant timing for providing such data may improve a likelihood that a vehicle operator, such as an aircraft pilot, will become aware of various risks at appropriate times, which may improve transportation safety. In some examples, the communication of vehicle-relevant data in accordance with the techniques described herein may cause a vehicle operator to perform at least one action resulting in the avoidance of a collision or reduced collision risk. For example, a vehicle operator may receive an indication of collision avoidance data (e.g., a visual indication and/or an auditory indication), which may enable the vehicle operator to reduce a speed of the vehicle in response to receiving the indication, thereby improving a likelihood of collision avoidance.

### DEFINITIONS

In some embodiments, the term "vehicle" refers to a mobile object or machine configured to travel or move from one location to another location. A vehicle may be propelled by at least one propulsion system, such as at least one engine, at least one motor, and/or the like. In some examples, a vehicle may transport a payload including at least one object and/or at least one individual. A vehicle may be equipped with at least one control system, such as a computing device, which may be configured to control the movement of the vehicle by communicating at least one control signal to at least one propulsion system of the vehicle. Additionally, or alternatively, the at least one control system may be configured to control at least one system of the vehicle other than the at least one propulsion system. In some examples, a vehicle and/or a control system of a vehicle may be controlled by or may receive at least one input from at least one individual, such as a pilot or a driver. In some other examples, a vehicle may be autonomous or unmanned. As described herein, a vehicle may be an aircraft, a spacecraft, a satellite, an automobile, a maritime vessel, an unmanned cargo vehicle utilized for package delivery, such as within a fulfilment or manufacturing system, and/or the like.

A vehicle may be equipped with at least one system, such as at least one computing device (e.g., at least one client device of a server). In some examples, a vehicle may communicate with at least one other vehicle via a wireless network. For example, a computing device of a vehicle may include communication circuitry, which may enable the vehicle to wirelessly communicate with at least one other vehicle and/or at least one other data source system.

In some embodiments, the term "data source system" refers to a system or device capable of communicating or otherwise sharing data with at least one other system or device. In some examples, a data source system may generate data for communicating with at least one other device. That is, data may originate from a data source system. Additionally, or alternatively, a data source system may receive data that originates from at least one other source and communicate or otherwise relay the data to at least one other device. A data source system may include at least one data storage system, such as at least one volatile memory device and/or at least one non-volatile memory device. Some illustrative examples of data source systems may include vehicles, weather monitoring systems, air traffic control (ATC) systems (e.g., ATC transcription), radar-based systems (e.g., transponders), and/or the like. As described herein, a data source system may be classified as a stationary data source system or a mobile data source system.

In some embodiments, the term "stationary data source system" refers to a data source system that is configured to have a fixed location. A ground-based data source system may be an example of a stationary data source system. For example, a ground-based weather monitoring system may be an example of a stationary data source system. Additionally, or alternatively, ground-based radar systems and ATC systems may be examples of stationary data source systems, among other examples. As described herein, a stationary data source system may generate or receive data for communicating with at least one other device, such as at least one vehicle or at least one computing device (e.g., at least one computing device associated with at least one vehicle).

In some embodiments, the term "mobile data source system" refers to a data source system that is configured to be transportable or mobile. Although in some examples, a mobile data source system may be temporarily (e.g., intermittently) stationary, a mobile data source system may be capable of operating while in motion. An air-based or vehicle-based data source system may be an example of a mobile data source system. For example, a mobile weather monitoring system may be an example of a mobile data source system. Additionally, or alternatively, vehicle-based radar systems, aircraft health monitoring systems, satellite navigation systems, and airborne collision avoidance systems may be examples of mobile data source systems.

In some embodiments, the term "vehicle-relevant data" refers to information or data that is associated with at least one vehicle. In some examples, vehicle-relevant data may be utilized by at least one vehicle-based system for the operation or control of a vehicle. For example, a data source system may transmit vehicle-relevant data to a vehicle and the vehicle may determine to reduce its speed based on the vehicle-relevant data. Vehicle-relevant data may, in some examples, include traffic data, weather data, navigational data (e.g., flight plan data), and vehicle operational data (e.g., fuel data, power data, diagnostic data), among other examples.

In some embodiments, the term "data classification" refers to a categorization, topic, or grouping that may be used to identify or sort data. A data classification may be generated or determined (e.g., by at least one processor) based on at least one data characteristic. In some examples, a data classification may correspond to a data type. For example, a first data classification may correspond to or identify data of a first type and a second data classification correspond to or identify data of a second type. In some examples, a data classification may be an example of or may otherwise be utilized as a topic in a publish-subscribe system. A data classification may be represented by or indicated by a phrase or identifier. For example, the phrase "flight plan data" may be used to identify a data classification. As described herein, a flight plan data classification may include flight plan data for at least one vehicle. Some other non-limiting examples of data classifications may include traffic data, weather data, navigational data, and vehicle operational data. In some examples, data may be classified by data source or intended recipient of the data. For example, at least one data object generated at a weather station having a specific location may be classified as data from the weather station or data from the specific location. In some examples, data may be classified or grouped according to vehicle type or a vehicle operator classification (e.g., data may be classified as being associated with a specific airline or a specific company). In one example, data may be classified according to at least one intended recipient for the data. For example, data intended for delivery to aircraft owned by a specific company may be classified by the company name.

In some embodiments, the term "client device" refers to a computing device within a client-server framework. In some examples, a client device may be a computing device associated with a vehicle. For example, a vehicle may include a client device such as an onboard computing system or control system configured to receive communications from at least one other computing device, such as a server. In some examples, a client device may communicate wirelessly with at least one data source system. For example, a vehicle such as an aircraft may include a computing device configured to receive weather data from a weather station. Although some examples described herein may refer to client devices, the described techniques may also be applied to software-based clients without loss of meaning. For example, any instance of the term "client device" described herein may also refer to at least one client application or client software package, which may be implemented or utilized independently of a physical device. For example, a single computing device may run multiple applications, which may be examples of clients or client applications in a client-server system.

In some embodiments, the term "subscription" refers to an agreement or request to receive or otherwise gain access to information. A subscription may be implemented within the context of a publish-subscribe framework. For example, a publisher (e.g., a first computing device or application) may selectively publish or otherwise communicate information to at least one subscriber (e.g., a second computing device or application) while refraining from publishing or otherwise communicating the information to at least one computing device or individual who is not a subscriber. As described herein, a subscription may enable at least one subscriber to receive a specific type of data associated with a subscription. For example, a computing device, such as a client device may subscribe to a specific data classification and may thereby receive or otherwise be granted access to data associated with the specific data classification. In some examples, data associated with a subscription may be published or provided by a computing device (e.g., at least one processor of a computing device, at least one context processor).

In some examples, a subscription may be associated with a specific time interval for publication of data associated with the subscription. For example, a publisher may publish or otherwise provide information to at least one subscriber periodically, such as daily, monthly, yearly, and/or the like. In some other examples, a publisher may publish or otherwise provide information based on the occurrence of at least one trigger event. For example, at least one context processor (e.g., at least one processor of at least one computing device) may publish data based on a determination that at least one context-based criterion is satisfied. As one illustrative example, a context-based criterion may be satisfied if a client device (e.g., a client device installed at a vehicle) is located within a specific region.

In some examples, a publish-subscribe model enables subscribes to receive a subset of a total quantity of published data. The process of selecting data (e.g., selecting at least one subset of data) or otherwise generating at least one data classification for publication may be referred to as filtering. At least one type of filtering may be utilized. For example, topic-based filtering and/or content-based filtering may be utilized. In a topic-based filtering framework, data may be published by topic (e.g., by data classification) or to at least one named logical channel. In such examples, at least one data classification may be utilized as a name for at least one logical channel. Subscribers in a topic-based system may receive data published under at least one topic to which they subscribe. Accordingly, subscribers to a topic may receive the same data. In such examples, a publisher may define or otherwise generate the topics or named logical channels to which subscribers may subscribe.

In a content-based system, data is provided or otherwise delivered to a subscriber if the attributes or content of the data match constraints or data classifications defined or otherwise generated by the subscriber. The subscriber may be responsible for classifying the data. In some examples, a hybrid framework may be employed where publishers post data to a topic while subscribers register content-based subscriptions to at least one topic. The publish-subscribe model may enable event-driven architectures and asynchronous parallel processing, while improving performance, reliability, and scalability. In accordance with examples described herein, any type of publish-subscribe framework may be utilized.

In some embodiments, the term "vehicle context data" refers to data indicative of contextual information for at least one vehicle. For example, vehicle context data may include motion data for a vehicle, position data for a vehicle, system data for a vehicle, passenger data for a vehicle, environmental data for a vehicle, and/or the like. In some examples, vehicle context data may be utilized to determine if at least one context-based criterion has been satisfied. For example, a context-based criterion may be satisfied if a position of a vehicle is within a region or within a threshold distance from a region or location. Vehicle context data may be generated and communicated by any type of data source system. For example, vehicle context data may be generated by a vehicle, a weather monitoring system, an ATC system, and/or the like.

In some embodiments, the term "motion data" refers to a first type of vehicle context data. In some examples, motion data may be indicative of at least one motion state of at least one object, such as a vehicle. Speed data (e.g., groundspeed data, airspeed data), acceleration data, climb rate data, descent rate data, and/or the like may be examples of motion data. In some examples, motion data may be communicated via data (e.g., at least one data object) that indicates at least one value. For example, a data object may include at least one bit indicative of a speed value, or any type of motion data value. Motion data may be generated and communicated by any type of data source system. For example, motion data may be generated by a vehicle, a weather monitoring system, an ATC system, and/or the like.

In some embodiments, the term "position data" refers to a second type of vehicle context data. In some examples, position data may be indicative of at least one position or location of at least one object, such as a vehicle. Coordinate data (e.g., global positioning system (GPS) coordinate data, latitude and longitude coordinates), altitude data, phase of flight data, and/or the like may be examples of position data. In some examples, position data may be communicated via at least one data object indicative of at least one value. For example, the data object may include at least one bit indicative of at least one coordinate value, or any type of position data value. Position data may be generated and communicated by any type of data source system. For example, position data may be generated by a vehicle, a weather monitoring system, an ATC system, and/or the like.

In some embodiments, the term "system data" refers to a third type of vehicle context data. In some examples, system data may be indicative of system information or operational information (e.g., flight operation information) for at least one vehicle. For example, system data may indicate at least one value of at least one parameter for a vehicle system. System data may include fuel level data, battery power data, engine performance data, and/or the like. In some examples, system data may be communicated via at least one data object indicative of at least one value. For example, the data object may include at least one bit indicative of at least one fuel level value, or any type of system data value. System data may be generated and communicated by any type of data source system. For example, system data may be generated by a vehicle, a weather monitoring system, an ATC system, and/or the like.

In some embodiments, the term "passenger data" refers to a fourth type of vehicle context data. In some examples, passenger data may be indicative of passenger information for at least one vehicle. For example, passenger data may indicate a quantity of passengers onboard a vehicle, identification information for at least one passenger onboard a vehicle (e.g., at least one passenger name, at least one passenger identification number), status information for at least one passenger onboard a vehicle (e.g., whether a passenger is present or absent), and/or the like. In some examples, passenger data may be communicated via at least one data object indicative of at least one value. For example, the data object may include at least one bit indicative of at least one passenger quantity, or any type of passenger data value. Passenger data may be generated and communicated by any type of data source system. For example, passenger data may be generated by a vehicle, a weather monitoring system, an ATC system, and/or the like.

In some embodiments, the term "environmental data" refers to a fifth type of vehicle context data. In some examples, environmental data may be indicative of environmental information. For example, meteorological data, such as air temperature data, precipitation data, humidity data, wind speed data, wind direction data, atmospheric pressure data, and/or the like may be examples of environmental data. Additionally, or alternatively, environmental data may include data indicative of at least one object located with a region or within a specific environment. For example, environmental data may be indicative of a quantity of vehicles located within a region or zone. Environmental data may be generated and communicated by any type of data source system. For example, environmental data may be generated by a vehicle, a weather monitoring system, an ATC system, and/or the like.

In some embodiments, the term "context-based criterion" refers to a condition, metric, or standard against which an evaluation may be made. For example, context data, such as vehicle context data may be compared to or otherwise evaluated with reference to at least one context-based criterion to determine whether to provide, publish, or otherwise cause transmission of vehicle-relevant data. For example, at least one processor may determine to transmit vehicle-relevant data based on determining that at least one context-based criterion is satisfied (e.g., by a vehicle). Additionally, or alternatively, at least one context-based criterion may be determined or otherwise learned by at least one processor (e.g., at least one context processor). For example, the at least one processor may receive historical data transfer information indicative of at least one data transfer event where vehicle-relevant data is transferred within at least one context (e.g., at a specific time, when a vehicle is in a specific location, and/or the like). The at least one processor may then determine or learn at least one context-based criterion based on the historical data transfer information. As one illustrative example, the at least one processor may learn that an aircraft being within a threshold distance of an airport is a context-based criterion for the transfer of airport traffic data based on at least one historical transfer of airport traffic data when at least one aircraft was within the threshold distance of the airport.

In some embodiments, the term "vehicle operational criterion" refers to a first type of context-based criterion. A vehicle operational criterion may be indicative of at least one operational state or condition of a vehicle, which may be utilized as a standard for at least one evaluation or determination. Some illustrative examples of vehicle operational criteria may include a fuel level criterion, a battery power criterion, an engine performance criterion, and/or the like. In one example, a fuel level criterion may be indicative of a threshold fuel level, which may be expressed as an absolute value or a percentage. For example, a remaining fuel level percentage of 10% may be an example of a vehicle operational criteria. In such examples, at least one action may be performed when the vehicle operational criterion is satisfied (e.g., when a remaining fuel level for a vehicle is at, below, or above 10%). For example, vehicle-relevant data may be communicated to a client device (e.g., of the vehicle) when a remaining fuel level of the vehicle is at or below 10%. Additionally, or alternatively, the vehicle-relevant data may be associated with a particular data classification (e.g., airport location data) and may be communicated to the client device based on the client device being subscribed to the data classification.

In some embodiments, the term "location-based criterion" refers to a second type of context-based criterion. A location-based criterion may be indicative of at least one operational state or condition of at least one vehicle, which may be utilized as a standard for at least one evaluation or determination. Some illustrative examples of location-based criterion may include a current vehicle location criterion, a projected or future vehicle location criterion, a flight plan criterion, and/or the like. A current vehicle location criterion may include positional information such as GPS coordinates, GPS coordinates and a radius or diameter representative of a geographic region around the GPS coordinates, altitude data (e.g., an altitude range or threshold), and/or the like, which may be compared with a current location of a vehicle to determine if the current vehicle location criterion is satisfied. A projected vehicle location criterion may include the positional information for comparison against a projected location of a vehicle. A flight plan criterion may include flight plan information, such as at least one waypoint of a flight plan, which may be compared with a flight plan of a vehicle.

In some embodiments, the term "environmental-based criterion" refers to a third type of context-based criterion. An environmental-based criterion may be indicative of at least one environmental condition, which may be utilized as a standard for at least one evaluation or determination. Some illustrative examples of environmental-based criteria may include a traffic criterion, a weather criterion, and/or the like. In one example, a traffic criterion may be indicative of a threshold quantity of other vehicles within a threshold distance of a vehicle. For example, if a vehicle is operating within a threshold distance of twenty or more other vehicles, a traffic criterion may be satisfied. In such examples, at least one action may be performed when the environmental-based criterion is satisfied. For example, vehicle-relevant data may be communicated to a client device (e.g., of a vehicle) when a specific quantity of other vehicles are operating within a threshold distance of the vehicle. Additionally, or alternatively, the vehicle-relevant data associated with a particular data classification (e.g., collision avoidance data) may be communicated to the client device based on the client device being subscribed to the data classification.

In some embodiments, the term "context processor" may refer to a component of a computing device, such as a processor of a computing device. A context processor may be configured to perform any of the operations described herein. For example, a context processor may receive vehicle-relevant data, generate at least one classification for the vehicle-relevant data, determine at least one client device subscribed to the at least one classification, determine that at least one context-based criterion is satisfied, and transmit at least the vehicle-relevant data in response to determining that the at least one context-based criterion is satisfied. It should be noted that any reference described herein to a computing device or computing system performing an operation may additionally, or alternatively refer to at least one processor or at least one context processor of the computing device performing the described operation. Additionally, or alternatively, a context processor may be a virtualized computing entity and/or may operate in a cloud-based computing environment.

In some embodiments, the term "context processing model" refers to a model or algorithm executed by at least one processor, such as a context processor. In some examples, a context processing model may be an example of a machine learning model, or any other type of model configured to learn or otherwise determine at least one pattern or relationship between input and output data based on historical information. In some examples, a context processing model or a context processor may receive data (e.g., vehicle-relevant data) and perform at least one operation to classify, group, or filter the data. For example, a context processor may generate a first data classification for a first portion of received data, a second data classification for a second portion of received data, and so forth. In some examples, data classification (e.g., text classification) may be performed using at least one classification algorithm (e.g., at least one text classification algorithm). In some examples, data classification may be performed using at least one pre-trained model (e.g., a pre-trained machine learning model). Additionally, or alternatively, a context processing model may determine at least one subscriber (e.g., at least one destination client) that data is provided to. In some examples, the determination of the at least one subscriber may be performed during or as part of a data classification operation.

A context processing model may be configured to perform any of the operations or techniques described herein. For example, a context processing model may determine whether at least one context-based criterion associated with a client device is satisfied. Additionally, or alternatively, the context processing model may learn or otherwise determine the at least one context-based criterion. In some examples, the context processing model may learn or otherwise determine the at least one context-based criterion based on historical data transfer information.

In some embodiments, the term "historical data transfer information" refers to information representative of at least one prior data transfer between two or more computing devices. In some examples, historical data transfer information may indicate information for at least one data transfer event. The historical data transfer information may include, for each data transfer event, an indication of at least one time of the data transfer event, the data or at least one copy of the data transferred during the data transfer event, at least one classification for the data transferred during the data transfer event, context data for the data transfer event (e.g., vehicle context data), an indication of whether at least one context-based criterion was satisfied at a time of the data transfer event, and/or the like.

In some examples, at least one processor may receive historical data transfer information indicative of at least one data transfer event where vehicle-relevant data is transferred in at least one context (e.g., at a specific time, when a vehicle or client device is in a specific location, and/or the like). The at least one processor may then determine or learn at least one context-based criterion based on the historical data transfer information. As one illustrative example, the at least one processor may learn that an aircraft being within a threshold distance of an airport is a context-based criterion for the transfer of airport traffic data based on at least one historical transfer of airport traffic data when at least one aircraft was within the threshold distance of the airport.

In some embodiments, the term "data transfer event" refers to an instance of data being communicated, transferred, provided, published, retrieved, or otherwise shared. For example, a computing device (e.g., a context processor of a computing device) transmitting vehicle-relevant data to a client device may constitute a data transfer event. The data transfer event may occur at a specific time, or with a specific frequency (e.g., periodically). In some examples, historical data transfer information may provide at least one record of the occurrence of at least one data transfer event.

In some embodiments, the term "historical vehicle-relevant data" refers to a type or classification for vehicle-relevant data. For example, historical vehicle-relevant data may be vehicle-relevant data generated or received prior to a specific time instance, such as prior to a current time. In some examples, historical vehicle-relevant data may be utilized (e.g., in combination with corresponding historical context information) to determine at least one context-based criterion. For example, historical vehicle-relevant data such as historical collision avoidance data communicated to a client device in response to the client device entering a region may enable at least one processor to learn that a context-based criterion for subsequent communication of collision avoidance data should be based on whether at least one client device has entered the region.

### EXAMPLE SYSTEMS AND PROCESSES OF THE DISCLOSURE

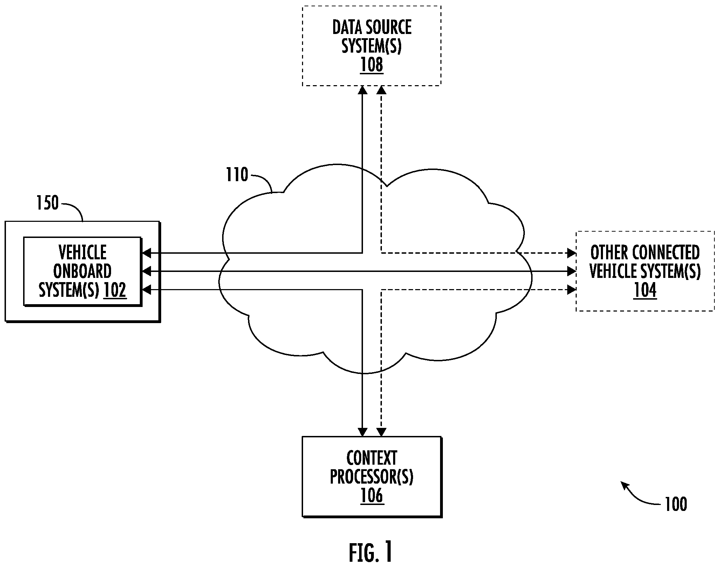

FIG. 1 illustrates a system for subscription-based communication of vehicle-relevant data in accordance with at least some embodiments of the present disclosure. Specifically, FIG. 1 depicts an example system 100 within which embodiments of the present disclosure may operate to communicate vehicle-relevant data as described herein. As depicted, the system 100 includes at least one vehicle onboard system 102, for example, which embodies at least one system of a vehicle 150. In some embodiments, the at least one vehicle onboard system 102 is optionally communicable with at least one other computing device and/or system, such as at least one other connected vehicle system 104, at least one context processor 106, and at least one data source system 108. In some embodiments, the at least one vehicle onboard system 102 is communicable with at least one of the other computing devices and/or systems over at least one communications network, such as the communications network 110.

In some embodiments, the at least one vehicle onboard system 102 includes any number of computing devices, entities, and/or systems embodied in hardware, software, firmware, and/or a combination thereof that control, operate, and/or are onboard a vehicle 150. For example, in some embodiments, the at least one vehicle onboard system 102 includes at least one physical component of the vehicle 150, including and without limitation at least one display, at least one flight management system, at least one engine, at least one wing, at least one prop, at least one motor, at least one antenna, at least one landing gear, and/or the like. In some embodiments, the at least one vehicle onboard system 102 includes at least one sensor that gathers, collects, and/or otherwise aggregates flight sensor data associated with a vehicle 150 and/or an environment associated therewith. Additionally, or alternatively, in some embodiments, the at least one vehicle onboard system 102 includes at least one computing device and/or system embodied in hardware, software, firmware, and/or a combination thereof, that controls operation of at least one physical component of the vehicle 150, including and without limitation at least one display, at least one flight management system, at least one engine, at least one wing, at least one prop, at least one motor, at least one antenna, at least one landing gear, at least one sensor, and/or the like. Additionally, or alternatively, in some embodiments, the at least one vehicle onboard system 102 includes at least one computing device and/or system embodied in hardware, software, firmware, and/or any combination thereof, that generates at least one user interface capable of being rendered to at least one display of the at least one vehicle onboard system 102. Additionally, or alternatively, in some embodiments, the at least one vehicle onboard system 102 includes at least one computing device and/or system embodied in hardware, software, firmware, and/or any combination thereof, that generates and/or maintains data embodying and/or utilized to recreate a virtual environment including virtual aspects corresponding to and/or associated with a real-world environment and/or a virtual vehicle corresponding to the actual vehicle. It will be appreciated that the vehicle 150 may include any number of physical components that enable the vehicle 150 to operate in a particular manner of airborne travel.

In some embodiments, the at least one vehicle onboard system 102 includes at least one personal computer, end-user terminal, monitor or other display, and/or the like. Additionally, or alternatively, in some embodiments, the at least one vehicle onboard system 102 includes at least one data repository embodied in hardware, software, firmware, and/or any combination thereof to support functionality provided by at least one computing device of the at least one vehicle onboard system 102. In some embodiments the at least one vehicle onboard system 102 includes at least one specially configured integrated system that processes data received by and/or controlled by at least one other computing device and/or system of the at least one vehicle onboard system 102.

The at least one other connected vehicle system 104 includes at least one computing device, system, and/or onboard system of at least one other vehicle communicatively coupled with the vehicle associated with at least one vehicle onboard system 102. It will be appreciated that the at least one other connected vehicle system 104 in some embodiments includes at least one computing device and/or at least one system of at least one other vehicle of the same type operating within the same environment as the vehicle associated with at least one vehicle onboard system 102. For example, in some embodiments some of the other connected vehicle systems 104 include at least one computing device and/or system of at least one other vehicle in a fleet of a particular type of vehicle. Additionally, or alternatively, in some embodiments, the at least one other connected vehicle system 104 includes at least one computing device and/or system of at least one ground vehicle, at least one other type of vehicle, and/or the like.

In some embodiments, the at least one vehicle onboard system 102 receives data from at least one of the other connected vehicle systems 104 that provides additional context with respect to the environment in which the vehicle 150 associated with at least one vehicle onboard system 102 is operating. For example, in some embodiments, the at least one vehicle onboard system 102 communicates with at least one other connected vehicle system 104 or data source system 108 to determine a position of at least one other vehicle, object, environmental feature (e.g., buildings, terrain, and/or the like) within the environment of the vehicle 150 associated with at least one vehicle onboard system 102, and/or the like. Additionally, or alternatively, in some embodiments, the at least one vehicle onboard system 102 communicates with at least one of the other connected vehicle systems 104 or data source systems 108 to receive flight sensor data of a particular data type that is not capturable directly by the at least one vehicle onboard system 102. For example, in some embodiments, the vehicle 150 associated with the at least one vehicle onboard system 102 does not include a particular sensor for capturing a particular type of data, and instead receives such data of the particular data type from the at least one other connected vehicle system 104.

In some embodiments, the at least one vehicle onboard system 102 may include at least one flight management system, which may itself include at least one computing device embodied in hardware, software, firmware, and/or the like that generate, assign, and/or maintain flight plan information and/or other flight detail data for at least one vehicle 150. For example, in some embodiments, the at least one flight management system includes at least one computing device and/or system of an ATC system and/or other authoritative entity that assigns flight detail data (e.g., at least one particular flight plan and/or information associated therewith) to at least one vehicle 150. Such information may include, without limitation, flight detail data embodying a VFR flight plan, an IFR flight plan, a composite flight plan, and/or the like defining conditions for operating a vehicle 150 within a particular environment.

In some embodiments, the at least one flight management system includes at least one application server, at least one end user terminal, at least one personal computer, at least one mobile device, at least one user device, and/or the like that generate, assign, and/or transmit flight detail data to at least one vehicle 150. Additionally, or alternatively, in some embodiments, the at least one flight management system includes at least one data repository embodied in hardware, software, firmware, and/or a combination thereof, that stores flight detail data, links between flight detail data and at least one particular vehicle 150, and/or the like. Additionally, or alternatively, in some embodiments, the at least one flight management system includes at least one computing device and/or system that detect and/or monitor operation of at least one vehicle 150 within an environment. For example, in some embodiments, the at least one flight management system includes at least one radar system that monitors the position of at least one vehicle 150 within a particular portion of an environment.

In some embodiments, the at least one data source system 108 may be an example of a system or device capable of communicating or otherwise sharing data with any of the at least one vehicle onboard system 102, the at least one other vehicle connected system 104, and the at least one context processor 106. In some examples, the at least one data source system 108 may generate data. That is, data may originate from the at least one data source system 108. Additionally, or alternatively, the at least one data source system 108 may receive data that originates from at least one other source and communicate or otherwise relay the data to at least one other device. A data source system 108 may include at least one data storage system, such as a volatile or non-volatile memory device. Some illustrative examples of data source systems 108 may include vehicles, weather monitoring systems, ATC systems, and/or the like. As described herein, the at least one data source system 108 may be classified as a stationary data source system or a mobile data source system.

The at least one data source system 108 may include at least one computing device and/or system that stores and/or generates data. In some examples, the data may represent at least one aspect of a real-world environment, object therein, and/or vehicle 150 therein. In some embodiments, the at least one data source system 108 includes at least one data repository that stores data embodying terrain of a particular environment. Additionally, or alternatively, in some embodiments, the at least one data source system 108 includes at least one data repository that stores data embodying at least one building, at least one object, and/or at least one other feature within the environment that at least one vehicle 150 in the environment is to avoid or interact with (e.g., for takeoff and/or landing). In some embodiments, the at least one data source system 108 embodies a subsystem of the at least one flight management system, the at least one vehicle onboard system 102, and/or at least one other connected vehicle system 104. In some embodiments, the at least one data source system 108 includes a cityscape obstacle database, a vertiport database (e.g., including locations, dimensions, and/or other characteristic of at least one landing zone), and/or the like.

In some embodiments, the at least one data source system 108 includes at least one application server, at least one end user terminal, at least one personal computer, at least one mobile device, at least one user device, and/or the like. Additionally, or alternatively, in some embodiments, the at least one data source system 108 includes at least one database server specially configured to store data pushed from at least one other computing device and/or system (e.g., the at least one vehicle onboard system 102, at least one other connected vehicle system 104, at least one flight management system, and/or the like) and/or retrieve data in response to at least one query from at least one other computing device and/or system. In some embodiments, the at least one data source system 108 includes at least one remote and/or cloud computing device accessible to the at least one vehicle onboard system 102, at least one other connected vehicle system 104, the at least one context processor 106 and/or at least one flight management system over a communications network, such as the communications network 110.

The system 100 may include at least one context processor 106. In some examples, a context processor 106 may refer to a component of a computing device, such as a processor of a computing device. A context processor 106 may be a processor of a computing device onboard a vehicle 150, a processor of a computing device not onboard a vehicle 150, or a virtualized processor. A context processor 106 may be configured to perform any of the operations described herein. For example, a context processor 106 may receive vehicle-relevant data, generate at least one classification for the vehicle-relevant data, determine at least one client device subscribed to the at least one classification, determine that at least one context-based criterion is satisfied, and transmit at least the vehicle-relevant data in response to determining that the at least one context-based criterion is satisfied. It should be noted that any reference described herein to a computing device or computing system performing an operation may additionally, or alternatively refer to at least one processor or at least one context processor 106 of the computing device performing the described operation. Additionally, or alternatively, a context processor 106 may be a virtualized computing entity and/or may operate in a cloud-based computing environment.

In some embodiments the communications network 110 enables communication between the various computing devices and/or systems utilizing at least one combination of wireless and/or wired data transmissions and protocols. In this regard, the communications network 110 may embody any of a myriad of network configurations. In some embodiments, the communications network 110 embodies a public network (e.g., the Internet) in whole or in part. In some embodiments, the communications network 110 embodies a private network (e.g., an internal network between particular computing devices) in whole or in part. Additionally, or alternatively, in some embodiments the communications network 110 embodies a direct or private connection facilitated over satellite or radio systems that enables long-range communication between vehicles 150 and corresponding grounded systems. In some other embodiments, the communications network 110 embodies a hybrid network (e.g., a network enabling internal communications between connected computing devices and external communications with other computing devices). The communications network 110 may include at least one base station, at least one relay, at least one router, at least one switch, at least one cell tower, at least one communications cable, at least one satellite, at least one radio antenna and/or at least one related control system, and/or associated routing station, and/or the like. In some embodiments, the communications network 110 includes at least one user entity-controlled computing device and/or other enterprise device (e.g., an end-user's or enterprise router, modem, switch, and/or other network access point) and/or at least one external utility device (e.g., at least one internet service provider communication tower, at least one cell tower, and/or at least one other device). In some embodiments, the at least one vehicle onboard system 102 communicates with at least one of the other connected vehicle systems 104, flight management systems, and/or data source systems 108 over the communications network 110 to receive and/or transmit vehicle-relevant data as described herein.

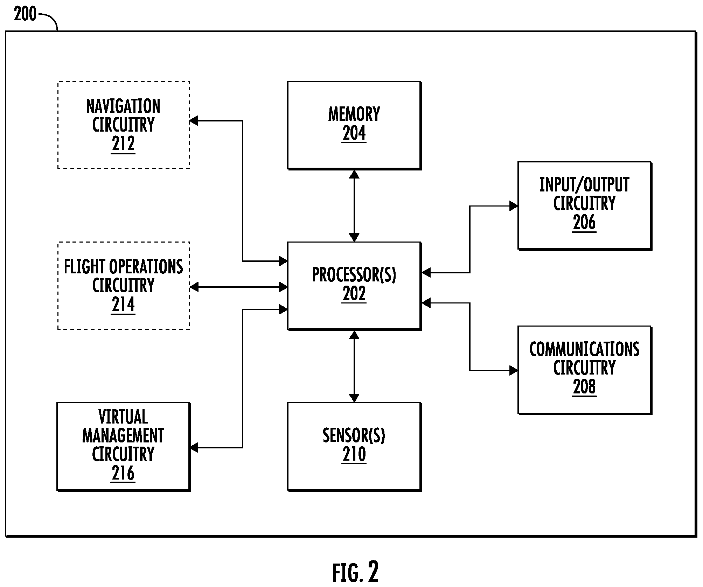

FIG. 2 illustrates a block diagram of a computing device for subscription-based communication of vehicle-relevant data in accordance with at least some embodiments of the present disclosure. Specifically, FIG. 2 depicts a computing device 200. In some embodiments, at least one computing device and/or system of a vehicle, for example included in or embodied by the at least one vehicle onboard system 102, is embodied by at least one computing device 200 as depicted and described in FIG. 2. As depicted, the computing device 200 includes at least one processor 202, at least one memory 204, input/output circuitry 206, communications circuitry 208, at least one sensor 210, navigation circuitry 212, flight operations circuitry 214, and/or virtual management circuitry 216. In some such embodiments, the navigation circuitry 212 and/or the flight operations circuitry 214 is/are optional. In some embodiments, the computing device 200 is configured, using at least one of the sets of circuitry embodying processor 202, memory 204, input/output circuitry 206, communications circuitry 208, at least one sensor 210, navigation circuitry 212, flight operations circuitry 214, and/or virtual management circuitry 216, to execute the operations described herein.

Although components are described with respect to functional limitations, the particular implementations necessarily include the user of particular computing hardware. It should also be understood that in some embodiments certain of the components described herein include similar or common hardware. For example, two sets of circuitry may both leverage use of the same processor, network interface, storage medium, and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the computing device 200 provide or supplement the functionality of another particular set of circuitry. For example, the processor 202 in some embodiments provides processing functionality to any of the other sets of circuitry, the memory 204 provides storage functionality to any of other the sets of circuitry, the communications circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the computing device 200. In some embodiments, for example, the memory 204 is non-transitory and includes for example, at least one volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the computing device 200 to carry out various functions in accordance with example embodiments of the present disclosure.

In various embodiments, the processor 202 is embodied in a number of different ways. For example, in some example embodiments, the processor 202 includes at least one processing device configured to perform independently. Additionally, or alternatively, in some embodiments, the processor 202 includes at least one processor configured in tandem via a bus to enable independent execution of instructions, pipelining, and/or multithreading. The use of the terms "processor" and "processing circuitry" should be understood to include a single core processor, a multi-core processor, multiple processors internal to the computing device 200, and/or at least one remote or "cloud" processor external to the computing device 200.

In an example embodiment, the processor 202 is configured to execute instructions stored in the memory 204 or otherwise accessible to the processor 202. Additionally, or alternatively, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Additionally, or alternatively, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with subscription-based communication of vehicle-relevant data, for example, as described with respect to at least one vehicle onboard system 102 and/or described further herein. In some embodiments, the processor 202 includes hardware, software, firmware, and/or a combination thereof, that generates or receives geometry data corresponding to a real-world environment associated with a particular vehicle. Additionally, or alternatively, in some embodiments, the processor 202 includes hardware, software, firmware, and/or a combination thereof, that receives and publishes vehicle-relevant data based on whether at least one context-based criterion is satisfied.

Additionally, or alternatively, in some embodiments, the processor 202 includes hardware, software, firmware, and/or a combination thereof, that captures and/or aggregates flight sensor data for determining whether at least one context-based criterion has been satisfied by a client device in the associated real-world environment, and/or the like. Additionally, or alternatively, in some embodiments, the processor 202 includes hardware, software, firmware, and/or a combination thereof, that outputs vehicle-relevant data.

In some embodiments, computing device 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise at least one user interface and in some embodiments includes at least one display that comprises the at least one interface rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202, and/or input/output circuitry 206 comprising a processor, in some embodiments is configured to control at least one function of at least one user interface element through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a service maintainer device and/or other display associated with a user.

The communications circuitry 208 includes any means such as a device or circuitry embodied in either hardware or a combination of hardware and software that is configured to receive and/or transmit data from/to a communications network and/or any other computing device, circuitry, or module in communication with the computing device 200. In this regard, the communications circuitry 208 includes, for example in some embodiments, a network interface for enabling communications with a wired or wireless communications network. Additionally, or alternatively in some embodiments, the communications circuitry 208 includes at least one network interface card, at least one antenna, at least one bus, at least one switch, at least one router, at least one modem, and supporting hardware, firmware, and/or software, or any other device suitable for enabling communications via at least one communications network. Additionally, or alternatively, the communications circuitry 208 includes circuitry for interacting with the at least one antenna and/or other hardware or software to cause transmission of signals via the at least one antenna or to handle receipt of signals received via the at least one antenna. In some embodiments, the communications circuitry 208 enables transmission to and/or receipt of data from at least one computing device and/or at least one system of at least one other connected vehicle system 104, at least one flight management system, and/or at least one data source system 108, in communication with the computing device 200.

The at least one sensor 210 includes hardware, software, firmware, and/or a combination thereof, that supports generation, capturing, aggregating, retrieval, and/or receiving of at least one portion of flight sensor data. In some embodiments, the at least one sensor 210 includes at least one discrete component of a vehicle. The at least one sensor 210 in some embodiments are affixed to, within, and/or otherwise as a part of a vehicle including or otherwise associated with the computing device 200. For example, in some embodiments, at least one of the sensors 210 is/are mounted to the vehicle. Non- limiting examples of sensors 210 include altimeters (e.g., radio and/or barometric), pressure sensors, pitot tubes, anemometers, image cameras, video cameras, infrared sensors, and/or the like. Additionally, or alternatively, in some embodiments, the at least one sensor 210 includes at least one communication system that enables aggregation of at least one portion of flight sensor data from at least one external computing device and/or system communicable with the computing device 200, for example at least one other connected vehicle system 104, at least one flight management system, and/or at least one data source system 108. In some embodiments, the at least one sensor 210 includes any of a myriad of sensors conventionally associated with drones, helicopters, and/or other urban air mobility vehicles. Additionally, or alternatively, in some embodiments, the at least one sensor 210 includes at least one high-sensitivity sensor to facilitate enable high accuracy capturing of data in certain circumstances. For example, in some embodiments, the at least one sensor 210 includes at least one high-sensitivity altimeter that captures detailed altitude information within a few feet (e.g., within tens of feet) from a landing zone. In this regard, such high-sensitivity sensors in some embodiments provide higher-accuracy data when a vehicle is close to a landing zone, where such higher-accuracy data is utilized in depicting accurate positioning of a virtual vehicle corresponding to the vehicle within a virtual environment with respect to a virtual representation of the landing zone and/or a virtual corridor.

In some embodiments, the at least one sensor 210 includes hardware, software, firmware, and/or a combination thereof, embodying at least one navigation sensor. In some embodiments, the at least one navigation sensor includes a global positioning satellite (GPS) tracking chip and/or the like enabling location services to be requested and/or determined for a particular vehicle. Additionally, or alternatively, in some embodiments, the at least one sensor 210 includes hardware, software, firmware, and/or any combination thereof, embodying at least one inertial navigation sensor that measures speed, acceleration, orientation, and/or position-related data in a 3D environment. Additionally, or alternatively, in some embodiments, the at least one sensor 210 includes at least one camera associated with a synthetic vision system (SVS). In some such embodiments, such an SVS camera captures image data representations of the real-world environment around a vehicle for use in generating at least one corresponding user interface depicting the captured image data, augmenting such image data, and/or otherwise providing data to enable an operator to acquire situational awareness based at least in part on the captured image data. It will be appreciated that, in some embodiments, the at least one sensor 210 includes a separate processor, specially configured field programmable gate array (FPGA), or a specially programmed application specific integrated circuit (ASIC).

The navigation circuitry 212, which may optionally be included, includes hardware, software, firmware, and/or a combination thereof, that supports various functionality associated with navigating a vehicle. In some embodiments, navigation circuitry 212 includes hardware, software, firmware, and/or a combination thereof, that receives flight plan data, location service data representing a location of the vehicle, and/or the like. Additionally, or alternatively, in some embodiments, the navigation circuitry 212 includes hardware, software, firmware, and/or a combination thereof, that determines a location of a landing zone from which a vehicle is taking off and/or where a vehicle is landing. Additionally, or alternatively, in some embodiments, the navigation circuitry 212 includes hardware, software, firmware, and/or a combination thereof, that determines a location along a flight path at which a vehicle is to switch operational mode (e.g., to initiate change to and/or from a vertical landing mode and/or vertical takeoff mode). It will be appreciated that, in some embodiments, navigation circuitry 212 includes a separate processor, specially configured field programmable gate array (FPGA), or a specially programmed application specific integrated circuit (ASIC).

The flight operations circuitry 214, which may optionally be included, includes hardware, software, firmware, and/or a combination thereof, that supports various functionality associated with controlling a vehicle. In some embodiments, the flight operations circuitry 214 includes hardware, software, firmware, and/or a combination thereof, that autonomously controls at least one component of a vehicle to facilitate movement of the vehicle along a particular flight path. Additionally, or alternatively, in some embodiments, the flight operations circuitry 214 includes hardware, software, firmware, and/or a combination thereof, that semi- autonomously controls at least one component of a vehicle, for example where certain aspects of the operation of the vehicle are autonomously performed and others (e.g., directional control) is/are controlled by a user (e.g., a pilot). Additionally, or alternatively, in some embodiments, the flight operations circuitry 214 includes hardware, software, firmware, and/or a combination thereof, that receives pilot input for controlling at least one component of a vehicle, for example via vehicle flight controls to alter speed and/or direction of the vehicle. Additionally, or alternatively, in some embodiments, the flight operations circuitry 214 includes hardware, software, firmware, and/or a combination thereof, that causes changes to an operational mode of a vehicle, for example autonomously based at least in part on at least one data-driven event and/or trigger, or in response to user input initiating the change in operational mode. It will be appreciated that, in some embodiments, the flight operations circuitry 214 includes a separate processor, specially configured field programmable gate array (FPGA), or a specially programmed application specific integrated circuit (ASIC).

The virtual management circuitry 216 includes hardware, software, firmware, and/or a combination thereof, that supports various functionality associated with generating and/or maintaining at least one virtual element and/or outputting at least one urban air mobility (UAM) visualization interface embodying at least one view of at least one virtual element. In some embodiments, the virtual management circuitry 216 includes hardware, software, firmware, and/or a combination thereof, that generates a virtual environment based at least in part on flight sensor data. Additionally, or alternatively, in some embodiments, the virtual management circuitry 216 includes hardware, software, firmware, and/or a combination thereof, that generates a virtual vehicle based at least in part on flight sensor data, the virtual vehicle corresponding to a vehicle in a real-world environment. Additionally, or alternatively, in some embodiments, the virtual management circuitry 216 includes hardware, software, firmware, and/or a combination thereof, that generates a virtual corridor based at least in part on flight sensor data. Additionally, or alternatively, in some embodiments, the virtual management circuitry 216 includes hardware, software, firmware, and/or a combination thereof, that maintains at least one virtual element (e.g., a virtual environment, a virtual vehicle, a virtual corridor, and/or the like) as new data is received. For example, in some embodiments, the virtual management circuitry 216 updates a speed, direction, velocity, altitude, and/or other data value associated with a virtual vehicle in a virtual environment as updated flight sensor data associated with a corresponding vehicle is received. Additionally, or alternatively, in some embodiments, the virtual management circuitry 216 includes hardware, software, firmware, and/or a combination thereof, that outputs data embodying a UAM visualization interface from a particular view with respect to the virtual vehicle, for example a profile view, an exocentric view, and/or an egocentric view.

In some embodiments, the virtual management circuitry 216 includes hardware, software, firmware, and/or any combination thereof, that generates at least one user interface element and/or otherwise causes rendering of at least one user interface including at least one specially configured user interface element. For example, in some embodiments, the virtual management circuitry 216 includes hardware, software, firmware, and/or a combination thereof that generates at least one virtual element to be depicted via a UAM visualization interface. For example, in some embodiments, the virtual management circuitry 216 generates a UAM visualization interface depicting a virtual corridor, with or without reliance on maintaining a virtual environment. In some embodiments, the virtual management circuitry 216 includes a graphics processor that generates at least one specially configured virtual user interface element (e.g., a representation of a virtual corridor) based at least in part on flight sensor data, and/or generating sub-interfaces including some or all of such virtual user interface elements and/or other interface elements. Additionally, or alternatively, in some embodiments, the virtual management circuitry 216 includes at least one display embodied in hardware, software, firmware, and/or a combination thereof, that render at least one user interface and/or element thereof. It will be appreciated that, in some embodiments, virtual management circuitry 216 includes a separate processor, specially configured field programmable gate array (FPGA), or a specially programmed application specific integrated circuit (ASIC).

It will be appreciated that, further in some embodiments, two or more of the sets of circuitries 202-216 are combinable. Additionally, or alternatively, in some embodiments, at least one of the sets of circuitry 202-216 perform some or all of the functionality described associated with another component. For example, in some embodiments, at least one of the sets of circuitry 202-216 are combined into a single component embodied in hardware, software, firmware, and/or a combination thereof. For example, in some embodiments, two or more of the navigation circuitry 212, flight operations circuitry 214, and/or virtual management circuitry 216 are embodied by a single set of circuitry that performs the combined operations of the individual sets of circuitry. Similarly, in some embodiments, at least one of the sets of circuitry, for example navigation circuitry 212, flight operations circuitry 214, and/or virtual management circuitry 216, is/are combined with the processor 202, such that the processor 202 performs at least one of the operations described above with respect to each of these other sets of circuitry.

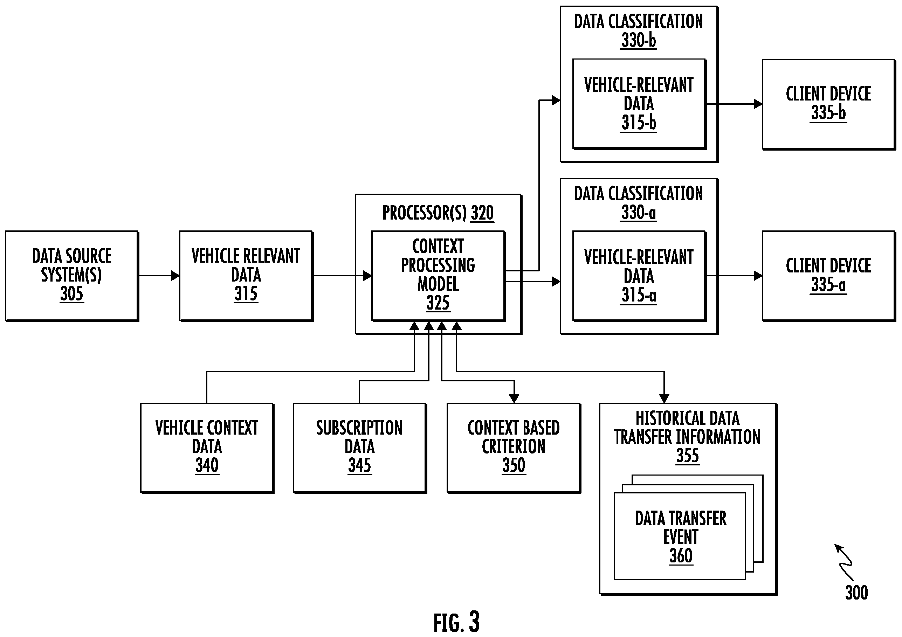

FIG. 3 is a dataflow diagram 300 showing example data structures and modules for subscription-based communication of vehicle-relevant data 315 in accordance with at least some embodiments of the present disclosure. The dataflow diagram 300 illustrates data structures and modules for filtering and publishing vehicle-relevant data 315 using at least one data classification 330. Vehicle-relevant data 315 may be delivered to at least one client device 335 based on whether at least one context-based criterion is satisfied and/or whether the at least one client device 335 is a subscriber to a given data classification 330, which may result in improved communication efficiency, reduced operational costs, and improved capabilities for effective and safe operation of at least one vehicle.

In some embodiments, vehicle-relevant data 315 associated with at least one data classification 330 of a plurality of data classifications 330 may be received. In some examples, the vehicle-relevant data 315 may be pre-classified (e.g., classified prior to being received by the at least one processor 320). In some other examples, the vehicle-relevant data 315 may not be classified prior to receipt and the at least one processor 320 may perform one or more operations to classify the vehicle-relevant data 315. In some examples, the vehicle-relevant data 315 may be received by at least one processor 320 (e.g., by a context processing model 325 of the at least one processor 320) from at least one data source system 305. In some examples, a data source system 305 may be a system or device capable of communicating or otherwise sharing data with at least one other system or device. In some examples, a data source system 305 may generate data (e.g., vehicle-relevant data 315) for communicating with at least one other device. That is, data may originate from a data source system 305. Additionally, or alternatively, a data source system 305 may receive data that originates from at least one other source and communicate or otherwise relay the data to at least one other device. A data source system 305 may include at least one data storage system, such as at least one volatile memory device and/or at least one non-volatile memory device. Some illustrative examples of data source systems 305 may include vehicles, weather monitoring systems, ATC systems (e.g., ATC transcription), radar-based systems (e.g., transponders), and/or the like. As described herein, a data source system 305 may be a stationary data source system or a mobile data source system.

In some examples, a stationary data source system may be a data source system 305 that is configured to have a fixed location. A ground-based data source system may be an example of a stationary data source system. For example, a ground-based weather monitoring system may be an example of a stationary data source system. Additionally, or alternatively, ground-based radar systems and ATC systems may be examples of stationary data source systems, among other examples. As described herein, a stationary data source system may generate or receive data for communicating with at least one other device, such as at least one vehicle or at least one computing device (e.g., at least one computing device associated with at least one vehicle).

In some examples, a mobile data source system may be a data source system 305 that is configured to be transportable or mobile. Although in some examples, a mobile data source system may be temporarily (e.g., intermittently) stationary, a mobile data source system may be capable of operating while in motion. An air-based or vehicle-based data source system may be an example of a mobile data source system. For example, a mobile weather monitoring system may be an example of a mobile data source system. Additionally, or alternatively, vehicle-based radar systems, aircraft health monitoring systems, satellite navigation systems, and airborne collision avoidance systems may be examples of mobile data source systems.

In some examples, vehicle-relevant data 315 may be information or data that is associated with at least one vehicle. In some examples, vehicle-relevant data 315 may be utilized by at least one vehicle-based system for the operation or control of a vehicle. For example, a data source system 305 may transmit vehicle-relevant data 315 to a vehicle and the vehicle may determine to reduce its speed based on the vehicle-relevant data 315. Vehicle-relevant data 315 may, in some examples, include traffic data, weather data, navigational data (e.g., flight plan data), and vehicle operational data (e.g., fuel data, power data, diagnostic data), among other examples.

In some examples, a data classification may be a categorization, topic, or grouping that may be used to identify or sort data. A data classification may be generated or determined (e.g., by at least one processor 320) based on at least one data characteristic. In some examples, a data classification may correspond to a data type. For example, a first data classification may correspond to or identify data of a first type and a second data classification correspond to or identify data of a second type. In some examples, a data classification may be an example of or may otherwise be utilized as a topic in a publish-subscribe system. A data classification may be represented by or indicated by a phrase or identifier. For example, the phrase "flight plan data" may be used to identify a data classification. As described herein, a flight plan data classification may include flight plan data for at least one vehicle. Some other non-limiting examples of data classifications may include traffic data, weather data, navigational data, and vehicle operational data. In some examples, data may be classified by data source or intended recipient of the data. For example, at least one data object generated at a weather station having a specific location may be classified as data from the weather station or data from the specific location. In some examples, data may be classified or grouped according to vehicle type or a vehicle operator classification (e.g., data may be classified as being associated with a specific airline or a specific company). In one example, data may be classified according to at least one intended recipient for the data. For example, data intended for delivery to aircraft owned by a specific company may be classified by the company name.

In some embodiments, a determination may be made as to whether at least one client device 335 is subscribed to the particular data classification. In some examples, the at least one processor 320 may make the determination. In some examples, a client device 335 may be a computing device within a client-server framework. In some examples, a client device 335 may be a computing device associated with a vehicle. For example, a vehicle may include a client device 335 such as an onboard computing system or control system configured to receive communications from at least one other computing device, such as a server. In some examples, a client device 335 may communicate wirelessly with at least one data source system 305. For example, a vehicle such as an aircraft may include a computing device configured to receive weather data from a weather station. Although some examples described herein may refer to client devices 335, the described techniques may also be applied to software-based clients without loss of meaning. For example, any instance of the term "client device 335" described herein may also refer to at least one client application or client software package, which may be implemented or utilized independently of a physical device. For example, a single computing device may run multiple applications, which may be examples of clients or client applications in a client-server system.

In some examples, a subscription may be an agreement or request to receive or otherwise gain access to information. In some examples, at least one client device 335 may communicate subscription data 345 (e.g., a subscription request) to at least one processor 320. In such examples, the at least one processor 320 may determine that at least one client device 335 is subscribed to at least one data classification 330 based on the subscription data 345. A subscription may be implemented within the context of a publish-subscribe framework. For example, a publisher (e.g., a first computing device or application) may selectively publish or otherwise communicate information to at least one subscriber (e.g., a second computing device or application) while refraining from publishing or otherwise communicating the information to at least one computing device or individual who is not a subscriber. As described herein, a subscription may enable at least one subscriber to receive a specific type of data associated with a subscription. For example, a computing device, such as a client device 335 may subscribe to a specific data classification and may thereby receive or otherwise be granted access to data associated with the specific data classification. In some examples, data associated with a subscription may be published or provided by a computing device (e.g., at least one processor 320 of a computing device, at least one context processor).

In some examples, a subscription may be associated with a specific time interval for publication of data associated with the subscription. For example, a publisher may publish or otherwise provide information to at least one subscriber periodically, such as daily, monthly, yearly, and/or the like. In some other examples, a publisher may publish or otherwise provide information based on the occurrence of at least one trigger event. For example, at least one context processor (e.g., at least one processor 320 of at least one computing device) may publish data based on a determination that at least one context-based criterion 350 is satisfied. As one illustrative example, a context-based criterion 350 may be satisfied if a client device 335 (e.g., a client device 335 installed at a vehicle) is located within a specific region.

In some examples, a publish-subscribe model enables subscribes to receive a subset of a total quantity of published data. The process of selecting data (e.g., selecting at least one subset of data) or otherwise generating at least one data classification for publication may be referred to as filtering. At least one type of filtering may be utilized. For example, topic-based filtering and/or content-based filtering may be utilized. In a topic-based filtering framework, data may be published by topic (e.g., by data classification) or to at least one named logical channel. In such examples, at least one data classification may be utilized as a name for at least one logical channel. Subscribers in a topic-based system may receive data published under at least one topic to which they subscribe. Accordingly, subscribers to a topic may receive the same data. In such examples, a publisher may define or otherwise generate the topics or named logical channels to which subscribers may subscribe.

In a content-based system, data is provided or otherwise delivered to a subscriber if the attributes or content of the data match constraints or data classifications defined or otherwise generated by the subscriber. The subscriber may be responsible for classifying the data. In some examples, a hybrid framework may be employed where publishers post data to a topic while subscribers register content-based subscriptions to at least one topic. The publish-subscribe model may enable event-driven architectures and asynchronous parallel processing, while improving performance, reliability, and scalability. In accordance with examples described herein, any type of publish-subscribe framework may be utilized.

In some embodiments, a determination may be made, based on vehicle context data 340, as to whether the at least one context-based criterion 350 associated with the at least one client device 335 is satisfied using a context processing model 325. In some examples, the determination may be made by the at least one processor 320. In some examples, the context processing model 325 may be configured to learn the at least one context-based criterion 350. In some examples, vehicle context day may be data indicative of contextual information for at least one vehicle. For example, vehicle context data 340 may include motion data for a vehicle, position data for a vehicle, system data for a vehicle, passenger data for a vehicle, environmental data for a vehicle, and/or the like. In some examples, vehicle context data 340 may be utilized to determine if at least one context-based criterion 350 has been satisfied. For example, a context-based criterion 350 may be satisfied if a position of a vehicle is within a region or within a threshold distance from a region or location. Vehicle context data 340 may be generated and communicated by any type of data source system 305. For example, vehicle context data 340 may be generated by a vehicle, a weather monitoring system, an ATC system, and/or the like.

In some examples, motion data may be a first type of vehicle context data 340. In some examples, motion data may be indicative of at least one motion state of at least one object, such as a vehicle. Speed data (e.g., groundspeed data, airspeed data), acceleration data, climb rate data, descent rate data, and/or the like may be examples of motion data. In some examples, motion data may be communicated via data (e.g., at least one data object) that indicates at least one value. For example, a data object may include at least one bit indicative of a speed value, or any type of motion data value. Motion data may be generated and communicated by any type of data source system 305. For example, motion data may be generated by a vehicle, a weather monitoring system, an ATC system, and/or the like.

In some examples, position data may be a second type of vehicle context data 340. In some examples, position data may be indicative of at least one position or location of at least one object, such as a vehicle. Coordinate data (e.g., global positioning system (GPS) coordinate data, latitude and longitude coordinates), altitude data, phase of flight data, and/or the like may be examples of position data. In some examples, position data may be communicated via at least one data object indicative of at least one value. For example, the data object may include at least one bit indicative of at least one coordinate value, or any type of position data value. Position data may be generated and communicated by any type of data source system 305. For example, position data may be generated by a vehicle, a weather monitoring system, an ATC system, and/or the like.

In some examples, system data may be a third type of vehicle context data 340. In some examples, system data may be indicative of system information or operational information (e.g., flight operation information) for at least one vehicle. For example, system data may indicate at least one value of at least one parameter for a vehicle system. System data may include fuel level data, battery power data, engine performance data, and/or the like. In some examples, system data may be communicated via at least one data object indicative of at least one value. For example, the data object may include at least one bit indicative of at least one fuel level value, or any type of system data value. System data may be generated and communicated by any type of data source system 305. For example, system data may be generated by a vehicle, a weather monitoring system, an ATC system, and/or the like.

In some examples, passenger data may be a fourth type of vehicle context data 340. In some examples, passenger data may be indicative of passenger information for at least one vehicle. For example, passenger data may indicate a quantity of passengers onboard a vehicle, identification information for at least one passenger onboard a vehicle (e.g., at least one passenger name, at least one passenger identification number), status information for at least one passenger onboard a vehicle (e.g., whether a passenger is present or absent), and/or the like. In some examples, passenger data may be communicated via at least one data object indicative of at least one value. For example, the data object may include at least one bit indicative of at least one passenger quantity, or any type of passenger data value. Passenger data may be generated and communicated by any type of data source system 305. For example, passenger data may be generated by a vehicle, a weather monitoring system, an ATC system, and/or the like.

In some examples, environmental data may be a fifth type of vehicle context data 340. In some examples, environmental data may be indicative of environmental information. For example, meteorological data, such as air temperature data, precipitation data, humidity data, wind speed data, wind direction data, atmospheric pressure data, and/or the like may be examples of environmental data. Additionally, or alternatively, environmental data may include data indicative of at least one object located with a region or within a specific environment. For example, environmental data may be indicative of a quantity of vehicles located within a region or zone. Environmental data may be generated and communicated by any type of data source system 305. For example, environmental data may be generated by a vehicle, a weather monitoring system, an ATC system, and/or the like.

In some examples, a context-based criterion 350 may be a condition, metric, or standard against which an evaluation may be made. For example, context data, such as vehicle context data 340 may be compared to or otherwise evaluated with reference to at least one context-based criterion 350 to determine whether to provide, publish, or otherwise cause transmission of vehicle-relevant data 315. For example, at least one processor 320 may determine to transmit vehicle-relevant data 315 based on determining that at least one context-based criterion 350 is satisfied (e.g., by a vehicle). Additionally, or alternatively, at least one context-based criterion 350 may be determined or otherwise learned by at least one processor 320 (e.g., at least one context processor). For example, the at least one processor 320 may receive historical data transfer information 355 indicative of at least one data transfer event 360 where vehicle-relevant data 315 is transferred within at least one context (e.g., at a specific time, when a vehicle is in a specific location, and/or the like). The at least one processor may then determine or learn at least one context-based criterion 350 based on the historical data transfer information 355. As one illustrative example, the at least one processor may learn that an aircraft being within a threshold distance of an airport is a context-based criterion 350 for the transfer of airport traffic data based on at least one historical transfer of airport traffic data when at least one aircraft was within the threshold distance of the airport.

In some examples, a vehicle operational criterion may be a first type of context-based criterion 350. A vehicle operational criterion may be indicative of at least one operational state or condition of a vehicle, which may be utilized as a standard for at least one evaluation or determination. Some illustrative examples of vehicle operational criteria may include a fuel level criterion, a battery power criterion, an engine performance criterion, and/or the like. In one example, a fuel level criterion may be indicative of a threshold fuel level, which may be expressed as an absolute value or a percentage. For example, a remaining fuel level percentage of 10% may be an example of a vehicle operational criteria. In such examples, at least one action may be performed when the vehicle operational criterion is satisfied (e.g., when a remaining fuel level for a vehicle is at, below, or above 10%). For example, vehicle-relevant data 315 may be communicated to a client device 335 (e.g., of the vehicle) when a remaining fuel level of the vehicle is at or below 10%. Additionally, or alternatively, the vehicle-relevant data 315 may be associated with the data classification 330-a (e.g., airport location data) and may be communicated to the client device 335-a based on the client device 335-a being subscribed to the data classification.

In some examples, a location-based criterion may be a second type of context-based criterion 350. A location-based criterion may be indicative of at least one operational state or condition of at least one vehicle, which may be utilized as a standard for at least one evaluation or determination. Some illustrative examples of location-based criterion may include a current vehicle location criterion, a projected or future vehicle location criterion, a flight plan criterion, and/or the like. A current vehicle location criterion may include positional information such as GPS coordinates, GPS coordinates and a radius or diameter representative of a geographic region around the GPS coordinates, altitude data (e.g., an altitude range or threshold), and/or the like, which may be compared with a current location of a vehicle to determine if the current vehicle location criterion is satisfied. A projected vehicle location criterion may include the positional information for comparison against a projected location of a vehicle. A flight plan criterion may include flight plan information, such as at least one waypoint of a flight plan, which may be compared with a flight plan of a vehicle.

In some examples, an environmental-based criterion may be a third type of context-based criterion 350. An environmental-based criterion may be indicative of at least one environmental condition, which may be utilized as a standard for at least one evaluation or determination. Some illustrative examples of environmental-based criteria may include a traffic criterion, a weather criterion, and/or the like. In one example, a traffic criterion may be indicative of a threshold quantity of other vehicles within a threshold distance of a vehicle. For example, if a vehicle is operating within a threshold distance of twenty or more other vehicles, a traffic criterion may be satisfied. In such examples, at least one action may be performed when the environmental-based criterion is satisfied. For example, vehicle-relevant data 315-a may be communicated to a client device 335-a (e.g., of a vehicle) when a specific quantity of other vehicles are operating within a threshold distance of the vehicle. Additionally, or alternatively, the vehicle-relevant data 315-a associated with the data classification 330-a (e.g., collision avoidance data) may be communicated to the client device 335-a based on the client device 335-a being subscribed to the data classification 330-a.

In some examples, a context or contextual processor may be a component of a computing device, such as a processor 320 of a computing device. A context processor may be configured to perform any of the operations described herein. For example, a context processor may receive vehicle-relevant data 315, generate at least one classification for the vehicle-relevant data 315, determine at least one client device 335 subscribed to the at least one classification, determine that at least one context-based criterion 350 is satisfied, and transmit at least the vehicle-relevant data 315 in response to determining that the at least one context-based criterion 350 is satisfied. It should be noted that any reference described herein to a computing device or computing system performing an operation may additionally, or alternatively refer to at least one processor or at least one context processor of the computing device performing the described operation. Additionally, or alternatively, a context processor may be a virtualized computing entity and/or may operate in a cloud-based computing environment.

In some examples, a context processing model 325 may be a model or algorithm executed by at least one processor 320, such as a context processor. In some examples, a context processing model 325 may be an example of a machine learning model, or any other type of model configured to learn or otherwise determine at least one pattern or relationship between input and output data based on historical information. In some examples, a context processing model 325 or a context processor may receive data (e.g., vehicle-relevant data 315) and perform at least one operation to classify, group, or filter the data. For example, a context processor may generate a data classification 330-a for a first portion of received data, a data classification 330-b for a second portion of received data, and so forth. In some examples, data classification (e.g., text classification) may be performed using at least one classification algorithm (e.g., at least one text classification algorithm). In some examples, data classification may be performed using at least one pre-trained model (e.g., a pre-trained machine learning model). Additionally, or alternatively, a context processing model 325 may determine at least one subscriber (e.g., at least one destination client) that data is provided to. In some examples, the determination of the at least one subscriber may be performed during or as part of a data classification operation.

A context processing model 325 may be configured to perform any of the operations or techniques described herein. For example, a context processing model 325 may determine whether at least one context-based criterion 350 associated with a client device 335 is satisfied. Additionally, or alternatively, the context processing model 325 may learn or otherwise determine the at least one context-based criterion 350. In some examples, the context processing model 325 may learn or otherwise determine the at least one context-based criterion 350 based on historical data transfer information 355.

In some embodiments, at least the vehicle-relevant data 315 may be transmitted or otherwise communicated to the at least one client device 335 in response to determining that the at least one context-based criterion 350 is satisfied. In some examples, the at least one processor 320 may transmit at least the vehicle-relevant data 315. In some examples, the vehicle-relevant data 315 may be published or otherwise provided to an application or a computing device capable of retaining or storing the vehicle-relevant data 315 until another computing device retrieves the vehicle-relevant data 315.

In some embodiments, historical data transfer information 355 indicative of at least one data transfer event 360 for historical vehicle-relevant data and at least one context corresponding to the at least one data transfer event 360 may be received. For example, the at least one processor 320 may receive the historical data transfer information 355. In some examples, historical data transfer information 355 may be information representative of at least one prior data transfer between two or more computing devices. In some examples, historical data transfer information 355 may indicate information for at least one data transfer event 360. The historical data transfer information 355 may include, for each data transfer event 360, an indication of at least one time of the data transfer event 360, the data or at least one copy of the data transferred during the data transfer event 360, at least one classification for the data transferred during the data transfer event 360, context data for the data transfer event 360 (e.g., vehicle context data 340), an indication of whether at least one context-based criterion 350 was satisfied at a time of the data transfer event 360, and/or the like.

In some examples, at least one processor 320 may receive historical data transfer information 355 indicative of at least one data transfer event 360 where vehicle-relevant data 315 is transferred in at least one context (e.g., at a specific time, when a vehicle or client device 335 is in a specific location, and/or the like). The at least one processor 320 may then determine or learn at least one context-based criterion 350 based on the historical data transfer information 355. As one illustrative example, the at least one processor 320 may learn that an aircraft being within a threshold distance of an airport is a context-based criterion 350 for the transfer of airport traffic data based on at least one historical transfer of airport traffic data when at least one aircraft was within the threshold distance of the airport.

In some examples, a data transfer event 360 may be an instance of data being communicated, transferred, provided, published, retrieved, or otherwise shared. For example, a computing device (e.g., a context processor of a computing device) transmitting vehicle-relevant data 315 to a client device 335 may constitute a data transfer event 360. The data transfer event 360 may occur at a specific time, or with a specific frequency (e.g., periodically). In some examples, historical data transfer information 355 may provide at least one record of the occurrence of at least one data transfer event 360.

In some examples, historical vehicle-relevant data may be a type or classification for vehicle-relevant data 315. For example, historical vehicle-relevant data may be vehicle-relevant data 315 generated or received prior to a specific time instance, such as prior to a current time. In some examples, historical vehicle-relevant data may be utilized (e.g., in combination with corresponding historical context information) to determine at least one context-based criterion 350. For example, historical vehicle-relevant data such as historical collision avoidance data communicated to a client device 335 in response to the client device 335 entering a region may enable at least one processor 320 to learn that a context-based criterion 350 for subsequent communication of collision avoidance data should be based on whether at least one client device 335 has entered the region.

In some embodiments, the context processing model 325 may be configured to learn the at least one context-based criterion 350 based on the historical data transfer information 355. For example, the at least one processor 320 may configure the context processing model 325 to learn the at least one context-based criterion 350. In some embodiments, a determination may be made to transmit (e.g., to the client device 335-a) the at least the vehicle-relevant data 315-a associated with the data classification 330-a and to refrain from transmitting (e.g., the client device 335-a) vehicle-relevant data 315-b associated with at least the data classification 330-b based on determining that the at least one client device 335-a is subscribed to the data classification 330-a and the at least one context-based criterion 350 is satisfied (e.g., by the client device 335-a). For example, the at least one processor 320 may determine to transmit the at least the vehicle-relevant data 315-a and to refrain from transmitting other vehicle-relevant data 315-b. In some examples, the client device 335-b may be subscribed to the data classification 330-b, and the at least one processor 320 may determine to transmit the at least the vehicle-relevant data 315-b to the client device 335-b based on the client device 335-b being subscribed to the data classification 330-b and/or at least one context-based criterion 350 being satisfied by the client device 335-b.

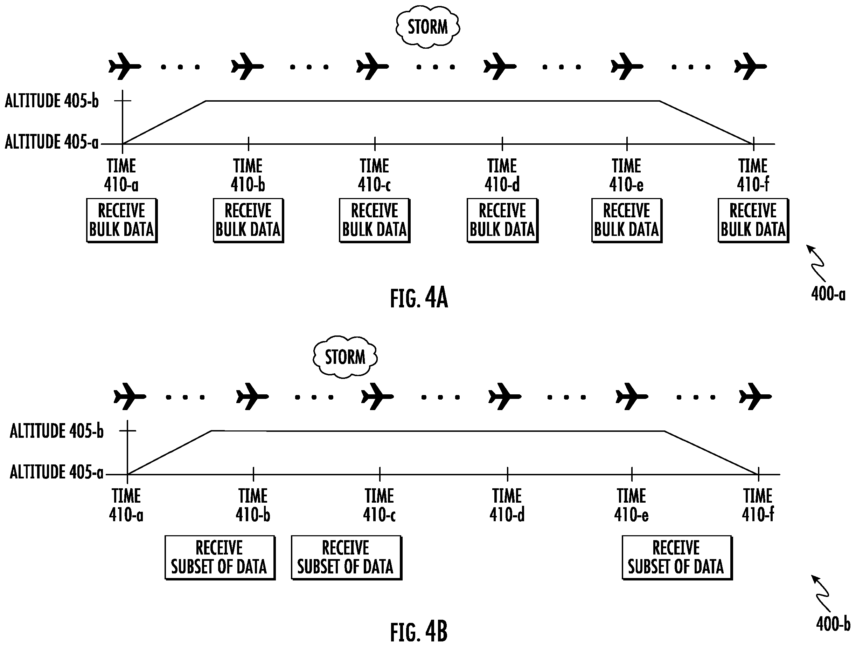

FIG. 4A is an operational example 400-a of a timing diagram that illustrates the communication of vehicle-relevant data in accordance with at least some embodiments of the present disclosure. In the operational example 400-a, a vehicle, such as an aircraft may receive bulk data communications (e.g., a bulk data record, vehicle-relevant data) at periodic time intervals, regardless of vehicle context. Additionally, or alternatively, the data communications described with reference to the operational example 400-a may not be performed within the context of a publish-subscribe framework. For example, a bulk data communication may be transmitted to each aircraft within range of the data source system.

In accordance with the operational example 400-a, at least one bulk data record may be communicated from at least one data source system to at least one aircraft, as shown. The at least one bulk data record may be communicated periodically. For example, the at least one bulk data record may be communicated at a time 410-a, a time 410-b, a time 410-c, a time 410-d, a time 410-e, and a time 410-f. The bulk data record may include multiple data objects (e.g., multiple data instances, multiple data entries). For example, the bulk data record may include navigational data, flight plan data, weather data, and/or the like. As one illustrative example, the bulk data record may include multiple flight plan data objects (e.g., each data object may include at least one waypoint or coordinate). As another illustrative example, the bulk data record may include multiple flight plan data objects and multiple weather data objects.

As shown, an aircraft may ascend from the altitude 405-a to the altitude 405-b between the time 410-a and the time 410-b. The aircraft may reach the altitude 405-b prior to the time 410-b. Additionally, the aircraft may encounter a storm between the time 410-c and the time 410-d. However, regardless of aircraft altitude and the location of the aircraft with respect to the storm, the bulk data record may be transmitted to the aircraft at fixed time intervals, which may present challenges. For example, the aircraft may receive data relevant to its descent phase at the time 410-a even though the data is not relevant to the aircraft during its initial ascent. As another illustrative example, the aircraft may receive weather data regarding the storm at the time 410-e and at the time 410-f even though the aircraft has passed the storm. As described herein, such communications may increase signaling overhead and increase operational costs. Accordingly, the techniques described herein provide for communication of vehicle-relevant data based on vehicle subscriptions to specific data classifications and/or context-based criteria, which may improve communication efficiency and reduce operational costs.

FIG. 4B is an operational example 400-b of a timing diagram that illustrates the subscription-based communication of vehicle-relevant data in accordance with at least some embodiments of the present disclosure. In the operational example 400-b, a vehicle, such as an aircraft may receive at least one data communication (e.g., at least one filtered data communication, at least a subset of a bulk data record, vehicle-relevant data) when at least one context-based criterion is satisfied (e.g., by the vehicle, by a client device associated with the vehicle). Additionally, or alternatively, the data communications described with reference to the operational example 400-b may be performed within the context of a publish-subscribe framework. For example, at least one data communication may be transmitted to at least one aircraft that is a subscriber to at least one data classification associated with the at least one data communication.

In accordance with the operational example 400-b, at least one data communication (e.g., a subset or portion of a bulk data record, filtered data) may be transmitted from at least one data source system to at least one aircraft, as shown. The at least one data communication may include vehicle-relevant data. In some examples, transmission of the at least one data communication may not be time-based and instead may be communicated in response to a determination that at least one context-based criterion has been satisfied. Although, in some examples, a context-based criterion may be time-based. As an illustrative example, a data communication may be transmitted to an aircraft between the time 410-a and the time 410-b, when the aircraft reaches the altitude 405-b (e.g., reaching the altitude 405-b may be an example of a context-based criterion). As another illustrative example, a data communication may be transmitted to an aircraft between the time 410-b and the time 410-c, when the aircraft encounters or is within a threshold distance of a storm. As yet a third illustrative example, a data communication may be transmitted to an aircraft between the time 410-e and the time 410-f, when the aircraft begins a descend phase transition or when an altitude of the aircraft is below the altitude 405-b.

Additionally, or alternatively, data communications transmitted or otherwise shared with an aircraft may be based on whether the aircraft or a client device associated with the aircraft is a subscriber to at least one data classification. For example, a client device installed at the aircraft may subscribe to weather data. Accordingly, the aircraft may receive data communications including weather data, which may constitute a subset or a portion of a bulk data record. Accordingly, excessive communication of irrelevant data may be avoided, thereby improving communication efficiency and reducing communication costs.

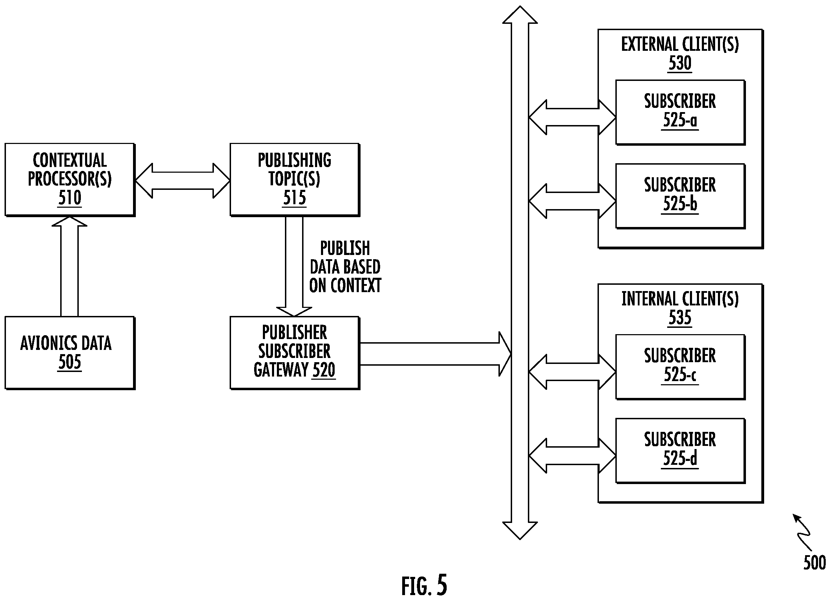

FIG. 5 is an operational example 500 of a signaling diagram for subscription-based communication of vehicle-relevant data in accordance with at least some embodiments of the present disclosure. As described herein, the signaling diagram provides examples of data communications between various entities, which may be implemented in hardware or software. In accordance with the operational example 500, avionics data 505 (e.g., vehicle-relevant data, context data) may be communicated to at least one contextual processor 510. Although not shown in the operational example 500, the avionics data 505 may be communicated by at least one data source system, such as a mobile data source system and/or a stationary data source system. The at least one contextual processor 510 may receive the avionics data 505 and may generate at least one publishing topic 515 (e.g., a cFMS controlled publishing topic) based on at least a portion of the avionics data 505 (e.g., based on at least vehicle-relevant data).

The at least one publishing topic 515 may be an example of a data classification. For example, the at least one publishing topic 515 may be weather data, and any weather data received by the at least one contextual processor 510 may be published under the at least one publishing topic 515. In some examples, data may be published via a publisher subscriber gateway 520. The publisher subscriber gateway 520 may be an example of a virtualized environment or application that enables one or more clients or subscribers to access data. For example, at least one subscriber 525 may access data published via the publisher subscriber gateway 520. In some examples, a subscriber 525 may access data via at least one communication bus.

In some examples, subscribers 525 may be classified or otherwise categorized as external clients 530 or internal clients 535. Internal clients 535 may be associated with a same company, organization, or entity as the at least one contextual processor 510. For example, a single company may own, operate, and/or maintain the at least one contextual processor 510 and/or at least one client device or application associated with a subscriber 525. Accordingly, external clients 530 may be associated with a different company, organization, or entity as the at least one contextual processor 510. As described herein, a software application and/or computing device may be an example of a subscriber 525. For example, the subscriber 525-a may be a software suite, such as GoDirect^{™} and the subscriber 525-b may be an EFB application. Additionally, or alternatively, the subscriber 525-c may be an enhanced ground proximity warning system (EGPWS) and the subscriber 525-d may be a runway awareness and advisory system (RAAS).

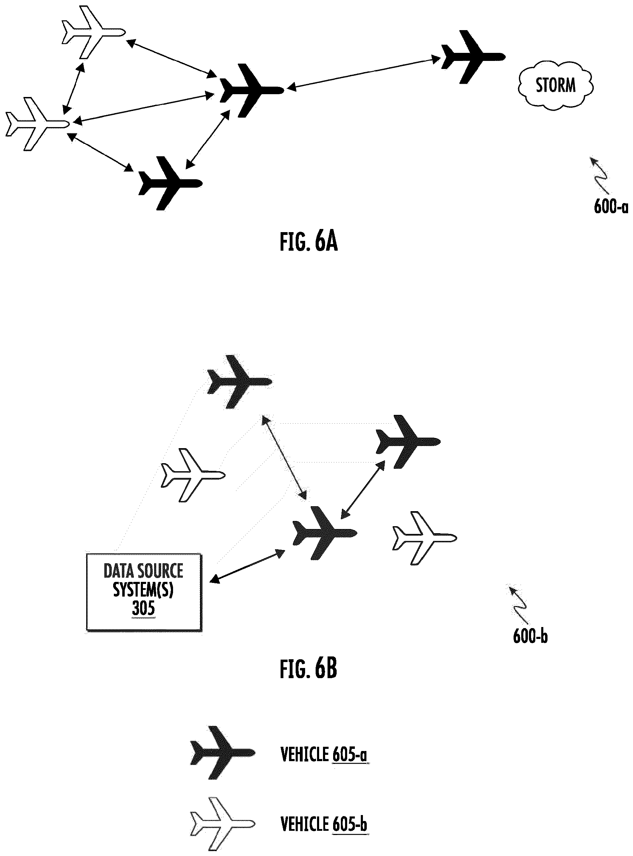

FIG. 6A is an operational example 600-a of a communication network that supports subscription-based communication of vehicle-relevant data in accordance with at least some embodiments of the present disclosure. The communication network includes at least one vehicle 605. In some examples, the communication network may include at least one vehicle 605-a, which may be a first type of vehicle 605 (e.g., an Airbus^{®} A330), and at least one vehicle 605-b, which may be a second type of vehicle (e.g., an Airbus^{®} A350). In some examples, a vehicle 605-a may be associated with or otherwise owned by a first company, while a vehicle 605-b may be associated with or otherwise owned by a second company. As described herein, two or more vehicles 605 may wirelessly communicate with one another. For example, at least one vehicle 605 that is located within a threshold distance of a storm may communicate data associated with the storm to at least one other vehicle 605.

In some examples, weather data may be communicated to at least one vehicle 605 during a flight. Some phenomena, such as storms or wind shear may present various operational hazards for vehicles 605. Accordingly, weather data may be transmitted from a data source system, such as a ground-based weather station or from a vehicle 605 that encounters a weather hazard. In some examples, data communications (e.g., data communications between vehicles 605), such as data communications occurring in in an oceanic region, utilize satellite links, which are more expensive than classical air-group communications such as very high frequency (VHF) communications, VDL VHF data link (VDL) communications, and/or high frequency data link (HFDL) communications. In some examples, publishers may include weather stations or aircraft (e.g., vehicles 605) which have knowledge about dangerous weather situations and subscribers may include aircraft (e.g., vehicles 605) with trajectories within a threshold distance of a relevant geographical area during a time period that at least one phenomenon is occurring. In order to perform such communications, the following data attributes or classifications may be utilized: type of phenomenon, geographic area of phenomena, and/or lifetime of phenomena.

In some examples, a vehicle 605 may subscribe to a particular data attribute or classification based on a geographical position of the vehicle 605 and/or a planned trajectory of the vehicle 605, among other examples. In some examples, a vehicle 605 may subscribe to weather information near its actual or short-term position. A subscription may be based on a vehicle 605 determining to receive all weather information for weather occurring in a specific geographical area in a specific time period, which may be deduced from current position and trajectory of the vehicle 605. Consequently, weather data may be communicated to subscribers located near the geographical area of the event or converging to that point within a threshold time period.

FIG. 6B is an operational example 600-b of a communication network that supports subscription-based communication of vehicle-relevant data in accordance with at least some embodiments of the present disclosure. The communication network includes at least one vehicle 605. In some examples, the communication network may include at least one vehicle 605-a, which may be a first type of vehicle 605 (e.g., an Airbus^{®} A330), and at least one vehicle 605-b, which may be a second type of vehicle (e.g., an Airbus^{®} A350). In some examples, a vehicle 605-a may be associated with or otherwise owned by a first company, while a vehicle 605-b may be associated with or otherwise owned by a second company. As described herein, two or more vehicles 605 may wirelessly communicate with one another. For example, at least one vehicle 605 that receive data from at least one data source system 305 may communicate the data to at least one other vehicle 605.

As described herein, communications between an airlines operational center (e.g., a stationary data source system) and aircraft (e.g., vehicles 605) may be referred to as airline operational communication (AOC). During a flight, information may be exchanged between these two actors (e.g., maintenance information, crew communications, and/or the like). In some examples, such communications may utilize an aircraft communication addressing and reporting system (ACARS). In some examples, based on aircraft position, VDL and/or satellite communications may be utilized. Although robust, such networks may have limited resources, such as limited bandwidth. Accordingly, it may be advantageous for irrelevant data communications to be minimized. For example, tailoring data communications to include transmissions to a specific type of vehicle 605 (e.g., vehicles 605-a or vehicles 605-b) may conserve communication resources.

In some examples, at least one airline operational center may be a publisher and at least one aircraft may be a subscriber. To filter data communications, an airline name may be utilized as attribute or a data classification. In such examples, the implementation of a publish-subscribe system may provide advantages when compared to other types of communications, such as multicast communications. For example, the publish-subscribe system described herein may provide data filtering capabilities, which may improve communication efficiency. For example, more focused communications may be achieved with data being transmitted to a specific type of aircraft or to aircraft bound for a given airport.

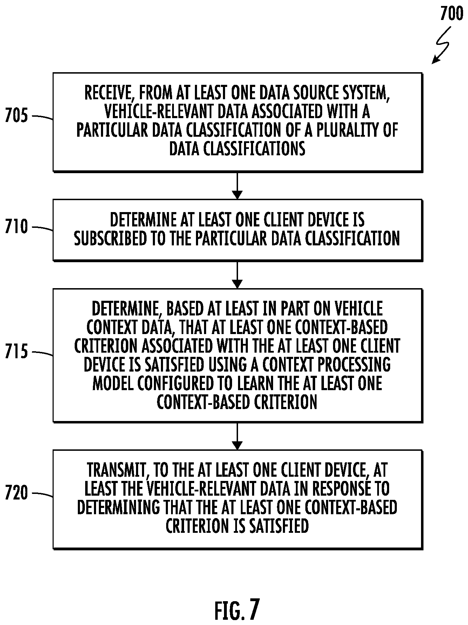

FIG. 7 illustrates a process 700 for subscription-based communication of vehicle-relevant data in accordance with at least some embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Additionally, or alternatively, in some embodiments, the process 700 is performed by at least one specifically configured computing device, such as at least one computing device 200 alone or in communication with at least one other component, device, system, and/or the like. In this regard, in some such embodiments, the computing device 200 is specially configured by computer-coded instructions (e.g., computer program instructions) stored thereon, for example in the memory 204 and/or another component depicted and/or described herein and/or otherwise accessible to the computing device 200, for performing the operations as depicted and described. In some embodiments, the computing device 200 is in communication with at least one external apparatus, system, device, and/or the like, to perform at least one of the operations as depicted and described. For example, the computing device 200, in some embodiments, is in communication with an end-user computing device, client device, and/or the like. For purposes of simplifying the description, the process 700 is described as performed by and from the perspective of the computing device 200.

The process 700 begins at operation 705. At operation 705, the computing device 200 includes means such as the sensors 210, navigation circuitry 212, flight operations circuitry 214, virtual management circuitry 216, communications circuitry 208, input/output circuitry 206, and/or processor 202, or a combination thereof, to receive, from at least one data source system, vehicle-relevant data associated with a particular data classification of a plurality of data classifications.

At operation 710, the computing device 200 includes means such as the sensors 210, navigation circuitry 212, flight operations circuitry 214, virtual management circuitry 216, communications circuitry 208, input/output circuitry 206, and/or processor 202, or a combination thereof, to determine at least one client device is subscribed to the particular data classification.

At operation 715, the computing device 200 includes means such as the sensors 210, navigation circuitry 212, flight operations circuitry 214, virtual management circuitry 216, communications circuitry 208, input/output circuitry 206, and/or processor 202, or a combination thereof, to determine, based at least in part on vehicle context data, that at least one context-based criterion associated with the at least one client device is satisfied using a context processing model configured to learn the at least one context-based criterion.

At operation 720, the computing device 200 includes means such as the sensors 210, navigation circuitry 212, flight operations circuitry 214, virtual management circuitry 216, communications circuitry 208, input/output circuitry 206, and/or processor 202, or a combination thereof, to transmit, to the at least one client device, at least the vehicle-relevant data in response to determining that the at least one context-based criterion is satisfied.

### CONCLUSION

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

In some embodiments, some of the operations above may be modified or further amplified. Furthermore, in some embodiments, additional optional operations may be included. Modifications, amplifications, or additions to the operations above may be performed in any order and in any combination.

Although an example processing system has been described above, implementations of the subject matter and the functional operations described herein can be implemented in other types of digital electronic circuitry, or in computer software, firmware, or hardware, including the structures disclosed in this specification and their structural equivalents, or in various combinations.

Embodiments of the subject matter and the operations described herein can be implemented in digital electronic circuitry, or in computer software, firmware, or hardware, including the structures disclosed in this specification and their structural equivalents, or in various combinations. Embodiments of the subject matter described herein can be implemented as at least one computer program, i.e., at least one module of computer program instructions, encoded on computer storage medium for execution by, or to control the operation of, information/data processing apparatus. Alternatively, or in addition, the program instructions can be encoded on an artificially generated, propagated signal, e.g., a machine- generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination. Moreover, while a computer storage medium is not a propagated signal, a computer storage medium can be a source or destination of computer program instructions encoded in an artificially generated, propagated signal. The computer storage medium can also be, or be included in, at least one separate physical component or media (e.g., multiple CDs, disks, or other storage devices).

The operations described herein can be implemented as operations performed by an information/data processing apparatus on information/data stored on at least one computer-readable storage device or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or any combination thereof. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., at least one script stored in a markup language document), in a single file dedicated to the program in question, or in multiple coordinated files (e.g., files that store at least one module, subprogram, or portion of code). A computer program can be deployed to be executed on one computer or on multiple computers that are located at one site or distributed across multiple sites and interconnected by a communication network.

The processes and logic flows described herein can be performed by at least one programmable processor executing at least one computer program to perform actions by operating on input information/data and generating output. Processors suitable for the execution of a computer program include, by way of example, both general and special purpose microprocessors, and any processor of any kind of digital computer. Generally, a processor will receive instructions and information/data from a read-only memory or a random access memory or both. The essential elements of a computer are a processor for performing actions in accordance with instructions and at least one memory device for storing instructions and data. Generally, a computer will also include, or be operatively coupled to receive information/data from or transfer information/data to, or both, at least one mass storage device for storing data, e.g., magnetic, magneto-optical disks, or optical disks.

However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of at least one such back-end, middleware, or front-end components. The components of the system can be interconnected by any form or medium of digital information/data communication, e.g., a communication network. Examples of communication networks include a local area network ("LAN") and a wide area network ("WAN"), an inter- network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, at least one feature from a claimed combination can in some cases be excised from the combination, and the claimed combination may be directed to a sub combination or variation of a sub combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method comprising:
receiving, from at least one data source system, vehicle-relevant data associated with a particular data classification of a plurality of data classifications;
determining at least one client device is subscribed to the particular data classification;
determining, based at least in part on vehicle context data, that at least one context-based criterion associated with the at least one client device is satisfied using a context processing model configured to learn the at least one context-based criterion; and
transmitting, to the at least one client device, at least the vehicle-relevant data in response to determining that the at least one context-based criterion is satisfied.

2. The method of claim 1, further comprising:
receiving historical data transfer information indicative of at least one data transfer event for historical vehicle-relevant data and at least one context corresponding to the at least one data transfer event; and
configuring the context processing model to learn the at least one context-based criterion based at least at part on the historical data transfer information.

3. The method of claim 1, further comprising:
determining to (i) transmit the at least the vehicle-relevant data associated with the particular data classification and (ii) refrain from transmitting other vehicle-relevant data associated with at least one other data classification based at least in part on determining that (a) the at least one client device is subscribed to the particular data classification and (b) the at least one context-based criterion is satisfied.

4. The method of claim 1, wherein the at least one context-based criterion comprises at least one of: (i) a vehicle operational criterion, (ii) a location-based criterion, or (iii) an environmental-based criterion.

5. The method of claim 1, wherein the plurality of data classifications comprises at least one of: (i) a data classification associated with weather data, (ii) a data classification associated with flight plan data, (iii) a data classification associated with airport data, or (iv) a data classification associated with notice to airmen (NOTAM) data.

6. The method of claim 1, wherein the at least one data source system comprises at least one of: (i) a stationary data source system or (ii) a mobile data source system.

7. The method of claim 1, wherein the vehicle context data comprises at least one of: (i) motion data for a vehicle, (ii) position data for the vehicle, (iii) system data for the vehicle, (iv) passenger data for the vehicle, or (v) environmental data for the vehicle.

8. A system comprising:
a plurality of client devices; and
at least one contextual processor in communication with at least one client device of the plurality of client devices, wherein the at least one contextual processor is configured to:
receive, from at least one data source system, vehicle-relevant data associated with a particular data classification of a plurality of data classifications;
determine the at least one client device is subscribed to the particular data classification;
determine, based at least in part on vehicle context data, that at least one context-based criterion associated with the at least one client device is satisfied using a context processing model configured to learn the at least one context-based criterion; and
transmit, to the at least one client device, at least the vehicle-relevant data in response to determining that the at least one context-based criterion is satisfied.

9. The system of claim 8, wherein the at least one contextual processor is further configured to:
receive historical data transfer information indicative of at least one data transfer event for historical vehicle-relevant data and at least one context corresponding to the at least one data transfer event; and
configure the context processing model to learn the at least one context-based criterion based at least at part on the historical data transfer information.

10. The system of claim 8, wherein the at least one contextual processor is further configured to:
determine to (i) transmit the at least the vehicle-relevant data associated with the particular data classification and (ii) refrain from transmitting other vehicle-relevant data associated with at least one other data classification based at least in part on determining that (a) the at least one client device is subscribed to the particular data classification and (b) the at least one context-based criterion is satisfied.

11. The system of claim 8, wherein the at least one context-based criterion comprises at least one of: (i) a vehicle operational criterion, (ii) a location-based criterion, or (iii) an environmental-based criterion.

12. The system of claim 8, wherein the plurality of data classifications comprises at least one of: (i) a data classification associated with weather data, (ii) a data classification associated with flight plan data, (iii) a data classification associated with airport data, or (iv) a data classification associated with notice to airmen (NOTAM) data.

13. The system of claim 8, wherein the at least one data source system comprises at least one of: (i) a stationary data source system or (ii) a mobile data source system.

14. The system of claim 8, wherein the vehicle context data comprises at least one of: (i) motion data for a vehicle, (ii) position data for the vehicle, (iii) system data for the vehicle, (iv) passenger data for the vehicle, or (v) environmental data for the vehicle.

15. An apparatus comprising:
at least one processor; and
at least one memory storing instructions that, when executed by the at least one processor, cause the apparatus to:
receive, from at least one data source system, vehicle-relevant data associated with a particular data classification of a plurality of data classifications;
determine at least one client device is subscribed to the particular data classification;
determine, based at least in part on vehicle context data, that at least one context-based criterion associated with the at least one client device is satisfied using a context processing model configured to learn the at least one context-based criterion; and
transmit, to the at least one client device, at least the vehicle-relevant data in response to determining that the at least one context-based criterion is satisfied.
